(19) Europäisches Patentamt
European Patent Office
Office européen des brevets

(11) **EP 3 582 359 A1**

(12) **EUROPEAN PATENT APPLICATION**
published in accordance with Art. 153(4) EPC

(43) Date of publication:
**18.12.2019 Bulletin 2019/51**

(51) Int Cl.:
***H02J 3/46*** *(2006.01)*

(21) Application number: **18893334.5**

(22) Date of filing: **25.05.2018**

(86) International application number:
**PCT/CN2018/088349**

(87) International publication number:
**WO 2019/200662 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2018 CN 201810357954**

(71) Applicant: **Northeastern University**
**Shenyang, Liaoning 110819 (CN)**

(72) Inventors:
• **SUN, Qiuye**
 **Liaoning 110819 (CN)**
• **YU, Xue**
 **Liaoning 110819 (CN)**
• **ZHANG, Huaguang**
 **Liaoning 110819 (CN)**
• **MA, Dazhong**
 **Liaoning 110819 (CN)**
• **LIU, Zhenwei**
 **Liaoning 110819 (CN)**

(74) Representative: **Office Kirkpatrick**
 **Avenue Wolfers, 32**
 **1310 La Hulpe (BE)**

(54) **STABILITY EVALUATION AND STATIC CONTROL METHOD FOR ELECTRICITY-HEAT-GAS INTEGRATED ENERGY SYSTEM**

(57)    The present invention provides a stability evaluation and static control method of an electricity-heat-gas integrated energy system, and relates to the technical field of integrated energy. The method comprises the following steps of S1, modeling the electricity-heat-gas integrated energy system by a method combining data driving with mechanism driving; S2, screening the abnormal data and performing association identification; S3, performing stability evaluation method, wherein focus on solving the power flow of energy flow, and calculating the reduction quantities and the wind abandoning quantities of the loads, whether the energy flow is out of limit is used as a criterion, and a calculate equation for stability indexes is defined, so that a system stability evaluation criteria comparison table is given; and S4, performing static control. One strategy is used for solving the problem independently by subsystems, and the other strategy is used for solving the problem through multisystem coordination. According to the integrated energy system model established through combination of data driving with mechanism driving, predication of the load change condition and double identification of abnormal data of the system are realized, and the system can be accurately and reasonably subjected to stability evaluation and static control.

Fig. 1

**Description**

**TECHNICAL FIELD**

The present invention relates to the technical field of integrated energy systems and particularly relates, in particular to a stability evaluation and static control method of an electricity-heat-gas integrated energy system.

**BACKGROUND ART**

At present, mankind faces multiple global challenges, such as environment pollution, global warming, oil crisis and the like, and traditional power grids cannot meet modern energy demands, so that a concept of an energy internet is proposed, and a concept of an integrated energy system is derived accordingly. The integrated energy system is a system which takes an electric system as a core and fully utilizes renewable energy by organically coordinating and optimizing links of distribution, transformation, storage, consumption and the like of various types of energy such as electricity, gas, heat and the like.

The modeling of the integrated energy system is mostly concentrated in an independent energy system at the present stage, a coupling relationship between energy systems is neglected, uncertainty of loads is not considered, and the situation of energy circulation between different systems and different links and the impact of load change on the system cannot be comprehensively described, so that a constructed model has a certain limitation.

In addition, most stability evaluation methods of the integrated energy system at the present stage are used for distinguishing abnormal data by a clustering algorithm, abnormal data cannot be accurately distinguished only by the clustering algorithm sometimes, and the abnormal data can be distinguished by fully utilizing the coupling relationship between different energy systems at the time.

Besides, specific evaluation indexes and a set of specific and feasible evaluation method are hardly given by the stability evaluation methods of the integrated energy system at the present stage.

Additionally, most static control strategies of the integrated energy system at the present stage are concentrated in an independent energy system, a multisystem coordinative solving thought when a problem cannot be solved by a subsystem independently is not adopted, and an actual situation whether the cost for solving the problem is limited is also not considered, so that certain problems exist in feasibility and comprehensiveness.

**SUMMARY**

In order to solve the technical problem that in accordance with the defects existing in the prior art, the present invention provides a stability evaluation and static control method of an electricity-heat-gas integrated energy system. According to the stability evaluation and static control method, a set of specific and feasible stability evaluation method is given, and on the basis, an abnormal system can be effectively and reasonably controlled by two static control strategies.

In order to solve the technical problem, the present invention adopts the technical scheme of a stability evaluation and static control method of an electricity-heat-gas integrated energy system. The stability evaluation and static control method comprises the following steps of

S1, establishing a database according to site data or historical data, predicting load change with data driving, so as to model the electricity-heat-gas integrated energy system, and namely, model the electricity-heat-gas integrated energy system by a method combining data driving with mechanism driving;

S2, identifying abnormal data, screening the abnormal data by an improved GSA and performing association identification on the abnormal data according to the coupling characteristics of the electricity-heat-gas integrated energy system;

S3, performing stability evaluation, comprising the following steps:

S3.1, reading initial state parameters of the integrated energy system, the sampling frequency is $k' = 1$, the out-of-limit frequency of energy flow is $m' = 0$, and the out-of-limit value of the energy flow at the $m'_{th}$ time is $A_{m'} = 0$;

S3.2, randomly selecting one disturbance from a contingency set and introducing the disturbance;

S3.3, sampling random variables corresponding to the state of system elements, the electrical/heat /gas load and wind speed by a non-sequential Monte Carlo simulation method, so as to acquire the system state;

S3.4, performing topology analysis on an electricity-heat-gas interconnected system, so as to analyze the number of subsystems formed by connecting the nodes of the system by branches and coupling elements;

S3.5, calculating a system obtained after topology analysis according to an established energy flow model, wherein the energy flow model of an electricity-heat-natural gas system is shown in follows:

$$\begin{cases} f_{EPS}\left(x_e, x_g, x_h, x_{HES}\right) = 0 \\ f_{NGS}\left(x_e, x_g, x_h, x_{HES}\right) = 0 \\ f_{DHS}\left(x_e, x_g, x_h, x_{HES}\right) = 0 \\ f_{HES}\left(x_e, x_g, x_h, x_{HES}\right) = 0 \end{cases}$$

wherein, $f_{EPS}$, $f_{NGS}$, $f_{DHS}$ and $f_{HES}$ respectively represent energy flow equations of a regional electric system, a regional natural gas system, a regional heat system and an energy coupling link; $x_e$ represents a relevant variable of the energy flow of the regional electric system; $x_g$ represents a relevant variable of the energy flow of the regional natural gas system; $x_h$ represents a relevant variable of the energy flow of the regional heat system; $x_{HES}$ represents a relevant variable of the energy flow of the energy coupling link; based on an integrated energy system model established in the step S1, the energy flow is integrally solved by a decoupling solving method, wherein the electric system adopts a forward-back substitution method for solving a power flow, the natural gas system adopts a Newton-Raphson method for solving the power flow, and the heat system adopts an energy flow solving method for solving the power flow;

S3.6, judging whether the energy flow is out of limit according to the calculation result of the energy flow model, wherein the number of out-of-limit frequency is $m'$+1 if yes; then recording the out-of-limit value $A_{m'}$ and the out-of-limit time $t_{m'}$ at the time and executing the step S3.7; directly executing the step S3.8 if not;

S3.7, establishing an optimized model consisting of nonlinear optimization problems for the state of the system having problems, and calculating the reduction quantities and the wind abandoning quantities of an electrical load, a gas load and a heat load by utilizing the optimized model, wherein the optimized model is effectively solved by an interior point method;

S3.8, judging whether the sampling frequency $k'$ is equal to the maximum sampling frequency, if yes, calculating a stability index and outputting a stability evaluation result, and else, repeating the steps S3.2-S3.6;

S4, performing static control on the electricity-heat-gas integrated energy system according to a stability evaluation result, wherein the static control comprises two strategies: a strategy of independently solving the problems with each subsystem and a strategy of solving the problems through multisystem coordination; for the strategy of solving the problems through multisystem coordination, a thought of multi-gent coordinative work is adopted, the electricity-heat-gas integrated energy system is coordinatively controlled according to the specific situations, the system can be recovered to the normal operating state by controlling the multiple subsystems and by virtue of the close coupling relationship among the subsystems when the system cannot be recovered to the normal operation state by controlling one subsystem; and the two strategies have two output results finally: a result of executing a solving scheme and recording a report, and a result of giving an alarm, and whether the problems can be solved at limited cost according to the standards of the output results is judged.

predicting the load change with data driving in the step S1 further comprises the following steps:

S1.1, acquiring site data for establishing the database, wherein the database is established by the historical data when the site data does not meet the requirement;

S1.2, making $X \in R^{M' \times d'}$, and getting rid of wild points according to the formula (1) by utilizing upper and lower cut-off points so as to obtain an effective data set $X \in \Omega$;

$$x_{ij} \notin \left[ M_{0.25j} - 1.5\left(M_{0.75j} - M_{0.25j}\right), M_{0.75j} + 1.5\left(M_{0.75j} - M_{0.25j}\right) \right] \qquad (1)$$

wherein, $R^{M' \times d'}$ represents an original historical data space, $X$ represents a historical data vector, $M_{qj}$ represents a quantile q of a $j_{th}$ variable in $X$, $d'$ represents the dimensionality of the data vector, $M'$ represents the number of original data vectors, $\Omega$ represents the processed historical data space, d represents the dimensionality of the data space $\Omega$, M represents the number of data vectors of the data space $\Omega$, i represents a serial number of the data vectors, $1 \le i \le M$, j represents a serial number of the dimensionality of the data vector, $1 \le j \le d$, $x_{ij}$ represents the numerical value of a $j_{th}$ variable in an $i_{th}$ data record, and Q represents the number of subspaces;

S1.3, dividing $\Omega$ into $q^j$ subsets according to each dimensionality, and assuming the maximum value and the minimum value of each dimensionality of $X_i$ as $X_{max}^j$ and $X_{min}^j$, and $2 \leq q^j \leq Min\left(M, X_{max}^j - X_{min}^j\right)$, so as to determine the number $q^1$, $q^2$,..., $q^j$ of the subspaces;

S1.4, determining boundaries of a hypercube, wherein $LU_{jt}$ and $LD_{jt}$ respectively represent an upper boundary and a lower boundary of a t ($2 \leq t \leq q^j$)$_{th}$ subspace on a $j_{th}$ dimensionality, namely

$$LU_{jt} = \left\lfloor \frac{\left(X_{max}^j - X_{min}^j\right)(t+1)}{q^j} \right\rfloor$$ and

$$LD_{jt} = \left\lfloor \frac{\left(X_{max}^j - X_{min}^j\right)t}{q^j} \right\rfloor ;$$

S1.5, changing space depth in a self-adaptive manner: during division of the subspaces, starting dividing of the subspaces from the minimum number of the spaces and calculating the number $P_i$ of data points in each of the divided subspaces, $i$ = 1, 2, ..., $q^1$ or $q^2$ or ... or $q^j$, namely that the number of the data points in the $q^1_{th}$ subspace is $P_i$, wherein $i$ = 1,2,...,$q^j$, the number of the data points in the $q^j_{th}$ subspace is $P_i$, and $i$ = 1,2,...,$q^j$; counting the number under a condition that $P_i$=0, wherein the division of the subspaces is not fine enough when the number is less than a set value $\varepsilon$, the space division depth needs to be increased, so that the space division is deepened continuously by increasing the number of $q^j$, and the space division is stopped until the number of spaces reaches $\varepsilon$ ;

S1.6, combining the subspaces: after space division, if only one piece of data exists in a part of spaces, calculating a mean value of euclidean distances between the data and data in the adjacent spaces, combining the data space and a data space with the minimum mean value and finally determining $q_1$ subspaces;

S1.7, performing regression modeling with a nonlinear iteration partial least squares method in the $q_1$ subspaces in sequence, so as to obtain regression models of all the subspaces,

S1.8, outputting a result and updating the database, wherein

the regression modeling in the step S1.7 further comprises the following steps of

S1.7.1, defining a boundary s of data, wherein when $j \leq s$, $x_{ij}$ represents input data, namely an independent variable, and an independent variable matrix is $X^t$; when $j > s$, $x_{ij}$ represents output data, namely a dependent variable, and a dependent variable matrix is $Y^t$; calculating a score vector $t_1$ and a load vector $p'$ of $X^t$, and calculating a score vector u and a load vector $q'$ of $Y^t$;

S1.7.2, calculating residual errors of the matrixes $X^t$ and $Y^t$, wherein the residual error of the matrix $X^t$ is $E = X^t - t_1 p'$, and the residual error of the matrix $Y^t$ is $F = Y^t - uq'$ ;

S1.7.3, calculating a predicted error square sum $S_{PRESS}$ and continuing to select pivot elements of the matrixes for iterative computation when the predicted error square sum is less than expected accuracy; when the predicted error square sum is more than the expected accuracy, obtaining the optimal number of the pivot elements and obtaining a relational expression of the matrixes $X^t$ and $Y^t$, so as to obtain a regression model $Y^t = F_t(X^t)$ of the subspace; and

S1.7.4, continuing to calculate a regression model of the next subspace and sequentially obtaining the regression models of all the subspaces, wherein

a step of modeling the integrated energy system by the method combining data driving with mechanism driving in the step S1 further comprises the following steps:

predicting the load change of an electric system with data driving, wherein

a mechanism model of the electric system is shown as follows:

$$\begin{cases} P_i^p = V_i^p \sum_{k=1}^{N} \sum_{m \in (a,b,c)} V_k^m \left( G_{ik}^{pm} \cos \theta_{ik}^{pm} + B_{ik}^{pm} \sin \theta_{ik}^{pm} \right) \\ Q_i^p = V_i^p \sum_{k=1}^{N} \sum_{m \in (a,b,c)} V_k^m \left( G_{ik}^{pm} \sin \theta_{ik}^{pm} - B_{ik}^{pm} \cos \theta_{ik}^{pm} \right) \end{cases}$$

wherein, $P_i^p$ and $Q_i^p$ respectively represent an active power net load and a reactive net load in a p phase at an i node, N represents the sum of nodes, $V_i^p$ represents voltage in the p phase at the i node, $V_k^m$ represents voltage in an m phase at a k node, $\cos \theta_{ik}^{pm}$ represents the phase angle difference of the p phase at the i node and the m phase at the k node, and $G_{ik}^{pm}$ and $B_{ik}^{pm}$ respectively represent conductivity and electrical susceptance between the p phase at the i node and the m phase at the k node;

relating the modeling $Y^t = F_t(X^t)$ of the load change with data driving with the mechanism model of the electric system, so as to meet the formula:

$$Y^t = F_t\left(X^t\right) = \sqrt{P_i^{p2} + Q_i^{p2}} \;;$$

Predicting the load change of the natural gas system with data driving, wherein
a mechanism model of the natural gas system is shown as follows:

$$A_{NGS} f + \omega = 0$$

$$Q_{pipe} = 5.72 * 10^{-4} \sqrt{\frac{(\Delta p) D^5}{f_r LS}}$$

wherein, $A_{NGS}$ represents an association matrix of nodes and pipelines in the regional natural gas system, $f$ represents a flow vector of each of natural gas pipelines in the regional natural gas system, $\omega$ represents a net load vector of each of the nodes in the regional natural gas system, $Q_{pipe}$ represents volume flow of the pipelines, $\Delta p$ represents gas pressure drop, D represents the diameter of each of the pipelines, $f_r$ represents the friction coefficient of pipeline walls, L represents the length of each of the pipelines, and S represents the specific gravity of gas;

relating the modeling $Y^t = F_t(X^t)$ of the load change with data driving with the mechanism model of the natural gas system, so as to meet the formula: $Y^t = F_t(X^t) = \omega$;

predicting the load change of a heat system with data driving, wherein
a mechanism model of the heat system is shown as follows:

a hydraulic model:
$$\begin{cases} A_{DHS} \vec{m} = \vec{m_q} \\ B_{DHS} K \vec{m} \left|\vec{m}\right| = \sum_{j_1=1}^{n_{pipe}} B_{i_1 j_1} K_{j_1} \vec{m_{j_1}} \left|\vec{m_{j_1}}\right| = 0 \end{cases};$$

a heat model:
$$\begin{cases} \phi = C_p \vec{m_q} \left(T_s - T_o\right) \\ T_{end} = \left(T_{start} - T_a\right) e^{-\frac{\lambda L}{C_p \vec{m}}} + T_a \\ \left(\sum \vec{m_{out}}\right) T_{out} = \sum \left(\vec{m_{in}} T_{in}\right) \end{cases}$$

wherein, $A_{DHS}$ represents an association matrix of nodes and pipelines in a regional heat system, $\vec{m}$ represents the mass flow rate of waterflow in the pipelines, $\vec{m_q}$ represents the mass flow rate of waterflow injected at the nodes, $i_1$ represents a loop label, $j_1$ represents a pipeline label, $B_{DHS}$ represents a loop association matrix for representing the relationship between a network loop and the pipelines, K represents the resistance coefficient in the pipelines, $\phi$ represents heat power consumed by the heat load, $C_p$ represents the specific heat capacity of water, $T_s$ represents water supply temperature when a heat supply network enters each of nodes of the heat load, $T_o$ represents water outlet temperature of each of the nodes of the heat load, $T_o$ is a known quantity, $T_{start}$ represents the temperature of waterflow when the waterflow enters the pipelines, $T_{end}$ represents the temperature of the waterflow when the waterflow flows out of the pipelines,

$T_a$ represents outdoor environment temperature, $\lambda$ represents the coefficient of heat conduction of the pipelines, L represents the length of each of the pipelines, $\overrightarrow{m_{out}}$ represents the mass flow rate of a water outlet pipeline, $\overrightarrow{m_{in}}$ represents the mass flow rate of a water inlet pipeline, $T_{out}$ represents the temperature of the water outlet pipeline, and $T_{in}$ represents the temperature of the water inlet pipeline;

relating the modeling $Y^t = F_t(X^t)$ of the load change with data driving with the mechanism model of the heat system, so as to meet the formula: $Y^t = F_t(X^t)=\phi$;

predicting the load change in an energy coupling link with data driving, wherein

a mechanism model of the energy coupling link is shown as follows:

$L_1 = CP$

wherein, $P$ and $L_1$ respectively represent an input vector and an output vector in the energy coupling link, and $C$ represents a coupling matrix; and

relating the modeling $Y^t = F_t(X^t)$ of the load change with data driving with the mechanism model of the energy coupling link, so as to meet the formula: $Y^t = F_t(X^t)=|L_1|$.

in the step S2, screening the abnormal data by an improved GSA and performing association identification on the abnormal data according to the coupling characteristic of the electricity-heat-gas integrated energy system, wherein the step further comprises the following substeps:

S2.1, screening the abnormal data through the improved GSA, which specifically comprises the following steps:

S2.1.1, performing numerical normalization preprocessing on measurement data of the integrated energy system, so as to obtain the square of an error;

S2.1.2, clustering input data and calculating the cluster dispersion $W_{k_1}$, wherein

$$W_{k_1} = \sum_{a=1}^{k_1} \frac{1}{2\left|C_a\right|} D_a \text{ ,}$$

wherein, $|Ca|$ represents the number of data points contained in a cluster Ca, and $D_a$ represents the square sum of the distance between every two adjacent data points of all the data points in the cluster Ca;

S2.1.3, calculating the expectation $E(\ln(W_{r,k_1}))$ of $\ln(W_{r,k_1})$ of reference data corresponding to the measurement data when the number of clusters is $k_1$, wherein

$$E\left(\ln\left(W_{r,k_1}\right)\right) = (1/F) \sum_{a=1}^{F} \left(\ln\left(W_{r,k_1}\right)\right),$$

wherein, F represents the number of classes of reference data sets generated according to uniform distribution within the normal scope of the data;

S2.1.4, calculating the gap counting value $Gap(k_1)$ corresponding to the number $k_1$ of the clusters, wherein the specific calculation formula is shown as follows:

$$Gap\left(k_1\right) = E\left(\ln\left(W_{r,k_1}\right)\right) - \ln\left(W_{k_1}\right)$$

the standard deviation $sd_{k_1}$ of $\ln(W_{r,k_1})$ and the standard deviation $s_{k_1}$, of $E(\ln(W_{r,k_1}))$ are calculated by the following formulas:

$$sd_{k_1} = \sqrt{\frac{1}{F} \sum_{a=1}^{F} \left[\ln\left(W_{r,k_1}\right) - E\left(\ln\left(W_{r,k_1}\right)\right)\right]^2} \text{ ;}$$

$$s_{k_1} = sd_{k_1}\sqrt{1+\frac{1}{F}}\ ;$$

S2.1.5, meeting the minimum $k_1$ value in an inequation $Gap(k_1) \geq Gap(k_1+1) - s_{k_1+1}$ namely the optimal number of the clusters;

S2.1.6, judging whether the abnormal data exists in the input data according to the condition whether $k_1$ is equal to 1; determining that the abnormal data does not exist in the input data if $k_1$ is equal to 1; else, determining that the abnormal data exists in the input data;

S2.2, inputting the abnormal data screened in the step S2.1 and performing association identification on the abnormal data according to the coupling characteristic of the electricity-heat-gas integrated energy system;

S2.2.1, respectively acquiring real-time measured data of the electric system, the heat system and the natural gas system;

S2.2.2, respectively calculating the change rates $\Delta_e$, $\Delta_h$ and $\Delta_g$ of the real-time measurement data of the electric system, the heat system and the natural gas system according to the following formula (2):

$$\Delta = \frac{\text{data at this time} - \text{data at last time}}{\Delta t} \times 100\% \qquad (2)\ ;$$

S2.2.3, preliminarily judging that the abnormal data belongs to the electric system, or the heat system or the natural gas system according to the acquired data of the electric system, the heat system and the natural gas system;

S2.2.4, finally judging which system has the abnormal data by the following three inequations shown in the formulas (3), (4) and (5) according to the preliminary judgment of the abnormal data of every system:

$$\left|\Delta_e - \Delta_h\right| \leq 2\% \qquad (3)$$

$$\left|\Delta_h - \Delta_g\right| \leq 2\% \qquad (4)$$

$$\left|\Delta_e - \Delta_g\right| \leq 2\% \qquad (5)$$

if preliminarily judging that the abnormal data belongs to the electric system, preliminarily judging whether $|\Delta_e - \Delta_h| \leq 2\%$ is met, if $|\Delta_e - \Delta_h| \leq 2\%$ is met, judging whether $|\Delta_h - \Delta_g| \leq 2\%$ is met, if $|\Delta_h - \Delta_g| \leq 2\%$ is also met, determining that system data is normal; if $|\Delta_h - \Delta_g| \leq 2\%$ is not met, determining that the natural gas system data is abnormal; if $|\Delta_e - \Delta_h| \leq 2\%$ is not met, judging whether $|\Delta_h - \Delta_g| \leq 2\%$ is met, and if $|\Delta_h - \Delta_g| \leq 2\%$ is met, determining that the heat system data is abnormal; and if $|\Delta_h - \Delta_g| \leq 2\%$ is not met, determining that the electric system data is abnormal;

if preliminarily judging that the abnormal data belongs to the heat system, preliminarily judging whether $|\Delta_e - \Delta_h| \leq 2\%$ is met, if $|\Delta_e - \Delta_h| \leq 2\%$ is met, judging whether $|\Delta_e - \Delta_g| \leq 2\%$ is met, if $|\Delta_e - \Delta_g| \leq 2\%$ is also met, determining that system data is normal; if $|\Delta_e - \Delta_g| \leq 2\%$ is not met, determining that the natural gas system data is abnormal; if $|\Delta_e - \Delta_h| \leq 2\%$ is not met, judging whether $|\Delta_e - \Delta_g| \leq 2\%$ is met, and if $|\Delta_e - \Delta_g| \leq 2\%$ is met, determining that the electric system data is abnormal; if $|\Delta_e - \Delta_g| \leq 2\%$ is not met, determining that the heat system data is abnormal;

if preliminarily judging that the abnormal data belongs to the natural gas system, preliminarily judging whether $|\Delta_e - \Delta_g| \leq 2\%$ is met, if $|\Delta_e - \Delta_g| \leq 2\%$ is met, judging whether $|\Delta_h - \Delta_g| \leq 2\%$ is met, and if $|\Delta_h - \Delta_g| \leq 2\%$ is also met, determining that system data is normal; if $|\Delta_h - \Delta_g| \leq 2\%$ is not met, determining that the natural gas system data is abnormal; if $|\Delta_e - \Delta_g| \leq 2\%$ is not met, judging whether $|\Delta_h - \Delta_g| \leq 2\%$ is met, and if $|\Delta_h - \Delta_g| \leq 2\%$ is met, determining that the electric system data is abnormal; and if $|\Delta_h - \Delta_g| \leq 2\%$ is not met, determining that the natural gas system data is abnormal.

the iteration process of the Newton-Raphson method in the step S3.5 is shown as follows:

$$\begin{cases} F\left(x_{fluid}^{(k_n)}\right) = J^{(k_n)}\Delta x_{fluid}^{(k_n)} \\ x_{fluid}^{(k_n+1)} = x_{fluid}^{(k_n)} - \Delta x_{fluid}^{(k_n)} \end{cases},$$

wherein
a first equation is an equation of a fluid part of the electricity-heat-natural gas system and comprises an energy flow
equation of the natural gas system and a hydraulic equation of the heat system; $x_{fluid}^{(k_n)}$ represents a to-be-solved variable of the fluid part of the electricity-heat-natural gas system and comprises an energy flow model of the natural gas system and relevant variables in the hydraulic model of the heat system; $J^{(k_n)}$ represents a jacobi matrix obtained during $k_{n\text{th}}$ iteration by the Newton-Raphson method, and $\Delta x_{fluid}^{(k_n)}$ represents a modification vector at this time;

$$F\left(x_{fluid}^{(k_n)}\right) = \begin{bmatrix} f_{fluid1}\left[x_{g1}^{(k_n)}, x_{g2}^{(k_n)}, \ldots, x_{gn}^{(k_n)}\right] \\ f_{fluid2}\left[x_{g1}^{(k_n)}, x_{g2}^{(k_n)}, \ldots, x_{gn}^{(k_n)}\right] \\ \vdots \\ f_{fluidn}\left[x_{g1}^{(k_n)}, x_{g2}^{(k_n)}, \ldots, x_{gn}^{(k_n)}\right] \end{bmatrix}$$ is an error vector obtained through iteration by the Newton-Raphson method;

an energy flow solving method of the heat system in the step S3.5 specifically comprises the following steps:
solving the hydraulic model by the Newton-Raphson method; solving the heat model according to the obtained mass flow rates of waterflow in all the pipelines; solving the water supply temperature and the water returning temperature, judging whether the calculation result of the energy flow of the heat system meets operation constraint and accuracy requirements, if yes, outputting the calculation result, and else, repeating the above process, wherein
the operation constraint comprises an equality constraint and an inequality constraint, wherein an active balance equation and a reactive balance equation of the electric system, a flow balance equation of the natural gas system and a flow balance equation of the heat system form the equality constraint; the equality constraint is shown in the following five formulas:

$$P_{G,e} + P_{GAS,e} + P_{CHP,e} + P_{W,e} + C_{e,x} - P_{DEV,e} - \Delta P_{W,e} - P_{D,e} - P_e = 0, \ e = 1,2,\ldots,N_e$$

$$Q_{G,e} + Q_{GAS,e} + Q_{CHP,e} + Q_{W,e} + Q_{C,e} - Q_{D,e} + C_{e,x} \cdot \frac{Q_{D,e}}{P_{D,e}} - Q_e = 0, \ e = 1,2,\ldots,N_e$$

$$F_{G,g} + F_{DEV,g} + C_{g,y} - F_{GAS,g} - F_{CHP,g} - F_{D,g} - F_g = 0, \ g = 1,2,\ldots,N_g$$

$$f_{G,h} + f_{DEV,h} + \frac{C_{h,z}}{GHV} + f_{CHP,h} - f_{D,h} - f_h = 0, \ h = 1,2,\ldots,N_h$$

$$P_{CHP,z} = \frac{\left(H_{CHP,z} - C_{h,z}\right)}{v_{CHP,z}}, \ z = 1,2,\ldots,N_b,$$

wherein
$P_{G,e}$, $P_{GAs,e}$ and $P_{CHP,e}$, as well as $Q_{G,e}$, $Q_{GAS,e}$ and $Q_{CHP,e}$ respectively represent active output power and reactive output power of a non-fuel gas conventional unit, a fuel gas power generation unit and a fuel gas combined heat and power generation unit at a node $e$ of the electric system; $P_{D,e}$, $Q_{D,e}$, $P_e$ and $Q_e$ respectively represent an active load, a reactive load, injected active power and injected reactive power at the node $e$ of the electric system; $P_{W,e}$, $Q_{W,e}$ and $\Delta P_{W,e}$ respectively represent active power, reactive power and wind abandoning power of a wind power station at the node $e$ of the electric system; $Q_{C,e}$ and $P_{DEV,e}$ respectively represent reactive compensation power and consumed power of a device at node $e$ of the electric system; $C_{e,x}$ is the load reduction variable at the electrical load node $x$; $F_{GAS,g}$,

$F_{CHP,g}$ and $F_{DEV,g}$ respectively represent consumed airflow of a fuel gas power generation unit and a fuel gas combined heat and power generation unit and injected airflow of the device at a node $g$ of the natural gas system; $F_{G,g}$, $F_{D,g}$ and $F_g$ respectively represent gas source injected airflow, the gas load and node injected airflow at the node g of the natural gas system; $C_{g,y}$ represents a load reduction variable at a node g of the gas load; GHV represents the high calorific value of natural gas; $f_{CHP,h}$ and $f_{DEV,h}$ respectively represent waterflow generated by a fuel gas combined heat and power generation unit and injected waterflow of the device at a node h of the heat system; $f_{G,h}$, $f_{D,h}$ and $f_h$ respectively represent heat source injected waterflow, a heat load and node injected waterflow at the node h of the heat system; $C_{h,z}$ represents load reduction variable at a node z of the heat load; $N_e$, $N_g$ and $N_h$ respectively represent the sum of nodes of the electric system, the nodes of the natural gas system and the nodes of the heat system; $P_{CHP,z}$, $H_{CHP,z}$ and $v_{CHP,z}$ respectively represent active output power, the heat load and the heat-to-electric ratio of the fuel gas combined heat and power generation unit z; $N_b$ represents the sum of the fuel gas combined heat and power generation units;

the inequality constraint comprises upper/lower limit constraints of reduction variables and wind abandoning variables of the electrical load, the gas load and the heat load, an operation constraint of a fuel gas unit, a node pressure constraint of the natural gas system, a gas source injected gas volume constraint, a compression ratio constraint of a compressor, a node pressure constraint of the electric system, an output power constraint of the non-fuel gas conventional unit and a line power constraint, wherein the inequality constraint is specifically shown as follows:

$$0 \leq C_{e,x} \leq P_{D,e}, \ x = 1, 2, \ldots, N_d$$

$$0 \leq \frac{C_{g,y}}{GHV} \leq F_{D,g}, \ y = 1, 2, \ldots, N_g$$

$$0 \leq C_{h,z} \leq H_{CHP,z}, \ z = 1, 2, \ldots, N_b$$

$$0 \leq \Delta P_{W,v} \leq P_{W,v}, \ v = 1, 2, \ldots, N_w$$

$$P_{GAS,z}^{\min} \leq P_{GAS,z} \leq P_{GAS,z}^{\max}, \ z = 1, 2, \ldots, N_a$$

$$Q_{GAS,z}^{\min} \leq Q_{GAS,z} \leq Q_{GAS,z}^{\max}, \ z = 1, 2, \ldots, N_a$$

$$P_{CHP,z}^{\min} \leq P_{CHP,z} \leq P_{CHP,z}^{\max}, \ z = 1, 2, \ldots, N_b$$

$$Q_{CHP,z}^{\min} \leq Q_{CHP,z} \leq Q_{CHP,z}^{\max}, \ z = 1, 2, \ldots, N_b$$

$$\pi_g^{\min} \leq \pi_g \leq \pi_g^{\max}, \ g = 1, 2, \ldots, N_g$$

$$F_{G,g}^{\min} \leq F_{G,g} \leq F_{G,g}^{\max}, \ g = 1, 2, \ldots, N_s$$

$$R_r^{\min} \leq R_r \leq R_r^{\max}, \ r = 1, 2, \ldots, N_p$$

$$V_e^{\min} \leq V_e \leq V_e^{\max}, \ e = 1, 2, \ldots, N_e$$

$$P_{G,e}^{\min} \leq P_{G,e} \leq P_{G,e}^{\max}, \ e = 1, 2, \ldots, N_u$$

$$Q_{G,e}^{\min} \leq Q_{G,e} \leq Q_{G,e}^{\max}, \ e = 1, 2, \ldots, N_u$$

$$-T_l^{\min} \leq T_l \leq T_l^{\max}, \ l = 1, 2, \ldots, N_r$$

$$\overrightarrow{m_n^{\min}} \leq \overrightarrow{m_n} \leq \overrightarrow{m_n^{\max}}, \ n = 1, 2, \ldots, N_t,$$

wherein,

$\pi_g$ represents the pressure at the node g of the natural gas system; $R_r$ represents the compression ratio of a compressor branch r; $T_l$ represents the power flowing through an electric transmission line $l$; $\overrightarrow{m_n}$ represents the mass flow rate of the pipelines in the heat system, and $\overrightarrow{m_n^{\max}}$ and $\overrightarrow{m_n^{\min}}$ respectively represent an upper limit and a lower limit; $N_t$ represents the sum of hot water pipeline, and $N_s$, $N_u$ and $N_r$ respectively represent the sum of gas sources of natural gas, non-fuel gas conventional units and electric transmission lines; $N_d$, $N_g$ and $N_b$ respectively represent the sum of the nodes of the electrical load, the nodes of the gas load and the fuel gas combined heat and power generation units; $N_a$ represents the sum of the fuel gas power generation units; $N_p$ represents the sum of the compressor branches; $V_e$ represents the voltage at the node $e$ of the electric system; and $N_w$ represents the sum of the wind power stations.

the optimized model in the step S3.7 is specially shown as follows:

the established optimized model takes the minimum value of the sum of the reduction quantities and the wind abandoning quantities of the electrical load, the gas load and the heat load as an optimized target, and an objective function is shown as follows:

$$\min \ f = \sum_{i=1}^{N_d} \lambda_{e,x} C_{e,x} + \sum_{m=1}^{N_g} \lambda_{g,y} C_{g,y} + \sum_{k=1}^{N_b} \lambda_{h,z} C_{h,z} + \sum_{i=1}^{N_w} \lambda_{w,v} \Delta P_{w,v}$$

wherein, $C_{e,x}$, $C_{g,y}$ and $C_{h,z}$ respectively represent the load reduction variables of the node $x$ of the electrical load, the node $y$ of the gas load and the fuel gas combined heat and power generation unit $z$; $\Delta P_{w,v}$ represents the wind abandoning variable of a wind power station $v$; $N_d$ and $N_g$ respectively represent the sum of the nodes of the electrical load and the nodes of the gas load; $\lambda_{e,x}$, $\lambda_{g,y}$, $\lambda_{h,z}$ and $\lambda_{w,v}$ respectively represent weight factors representing the significance of the electrical load, the gas load and the heat load and the wind abandoning severity of all the wind power stations;

the operation constraint in the step S3.5 is used as a constraint condition of the optimized model and comprises the equality constraint consisting of the active balance equation and the reactive balance equation of the electric system, the flow balance equation of the natural gas system and the flow balance equation of the heat system and the inequality constraint consisting of the upper/lower limit constraints of the reduction variables and the wind abandoning variables of the electrical load, the gas load and the heat load, the operation constraint of the fuel gas unit, the node pressure constraint of the natural gas system, the gas source injected gas volume constraint, the compression ratio constraint of the compressor, the node pressure constraint of the electric system, the output power constraint of the non-fuel gas conventional unit and the line power constraint;

calculating the stability index in the step S3.8 comprises:

$$p_y' = \frac{\sum_{m'=1}^{m'_{\max}} \int A_{m'} dt_{m'}}{\sum_{m'=1}^{m'_{\max}} E \cdot t_{m'}} \times 100\%,$$

out-of-limit degree:

wherein, $A_{m'}$ represents the out-of-limit degree of the energy flow at the $m'_{th}$ time, $t_{m'}$ represents the out-of-limit time of the energy flow at the $m'_{th}$ time, E represents the total energy of the electricity-heat-gas system, and $m'_{\max}$ represents the total number of times of out-of-limit of the energy flow;

out-of-limit ratio: $q_y{'}=\dfrac{m'_{max}}{N}\times 100\%$,

wherein, $N$ represents the sampling frequency;

the stability of the system is evaluated according to the value of $(p_y{'},q_y{'})$, evaluation standard scores are given according to a stability evaluation standard comparison table which is shown in Tab. 1, and the full score is 10;

Table 1

| Condition | Evaluation Score |
|---|---|
| $pq \leq 0.04\%$ | 10 |
| $0.04\% < pq \leq 0.25\%$ | 9 |
| $0.25\% \leq pq \leq 1\%$ | 8 |
| $1\% < pq \leq 2.25\%$ | 7 |
| $2.25\% < pq \leq 4\%$ | 6 |
| $4\% < pq \leq 6.25\%$ | 5 |
| $6.25\% < pq \leq 9\%$ | 4 |
| $9\% < pq \leq 12.25\%$ | 3 |
| $12.25\% < pq \leq 16\%$ | 2 |
| $16\% < pq \leq 25\%$ | 1 |
| $pq > 25\%$ | 0 |

The difference of time scales needs to be considered for calculation of the stability index, specifically, for the heat load, calculation of the index needs to be modified, and the modification of the stability index of the heat load comprises the following steps: determining that the temperature is constant when no disturbance exists and determining that the energy flow is out of limit if the temperature of the heat load is lower than the lower temperature limit or higher than the upper temperature limit in some time period, wherein the time period is a part of the total lasting time that the energy flow is out of limit or is not restrained after disturbance appears;

the limited cost in the step 4 comprises time cost, human cost and capital cost which are shown in the following three formulas:

$$C_{t''}=\frac{t''}{T''};$$

$$C_{h''}=\frac{h''}{H''};$$

$$C_{p''}=\frac{p''}{P''};$$

wherein, $C_{t''}$ represents the time cost, $t''$ represents the time from a process of causing problem, to a process of solving the problem and to a process of recovering to be normal of the system, and $T''$ represents the time from problem causing of the system at the last time to the problem causing of the system at this time; $C_{h''}$ represents the human cost, $h''$ represents the number of persons for solving the problems, and $H''$ represents the number of workers for normal work of the system; $C_{p''}$ represents the capital cost, $p''$ represents the amount of capitals required for solving the problems, and $P''$ represents the amount of capitals required for annual mean maintenance of the system; and

the cost belongs to the limited cost only when all the three formulas meet the inequality constraints shown as follows, and the cost belong to the excess cost otherwise:

$$\begin{cases} C_{t''} = \dfrac{t''}{T''} \le \dfrac{1}{100} \\[2mm] C_{h''} = \dfrac{h''}{H''} \le \dfrac{9}{10} \\[2mm] C_{p''} = \dfrac{p''}{P''} \le \dfrac{1}{2} \end{cases}.$$

Through the adoption of the technical scheme, the stability evaluation and static control method of the electricity-heat-gas integrated energy system has the beneficial effects that in the method, based on a concept and major characteristics of the integrated energy system, a model capable of predicting the load change is constructed by adopting a method combining mechanism driving with data driving; abnormal data can be distinguished on the basis of the constructed model, comprising two steps: screening the abnormal data through an improved GSA (gravitational search algorithm) and performing association identification on the abnormal data according to the coupling characteristic of the electricity-heat-gas system; besides, a set of specific and feasible stability evaluation method is given by virtue of the stability evaluation method of the integrated energy system by solving the power flow of energy flow and calculating the reduction quantities and the wind abandoning quantities of the loads; on the basis, the static control strategies adopt a multisystem coordinative solving thought when a problem cannot be solved by a subsystem independently, and an actual situation whether the cost for solving the problem is limited, is considered, so that the abnormal system is effectively and reasonably controlled. In a stability index calculation formula and a stability evaluation comparison table which are proposed by the present invention, two aspects of the degree of out-of-limit and the rate of out-of-limit of the energy flow are comprehensively considered, and the balance between the two aspects is achieved.

## DESCRIPTION OF DRAWINGS

Fig. 1 is a general flow chart of a stability evaluation and static control method of an electricity-heat-gas integrated energy system, provided by the embodiment of the present invention;
Fig. 2 is a flow chart of a step of predicting load change with data driving, provided by the embodiment of the present invention;
Fig. 3 is a flow chart of a step of regression modeling, provided by the embodiment of the present invention;
Fig. 4 is a schematic diagram of a model of the integrated energy system combining data driving with mechanism driving, provided by the embodiment of the present invention;
Fig. 5 is a flow chart of a step of screening abnormal data through an improved GSA, provided by the embodiment of the present invention;
Fig. 6 is a flow chart of a step of distinguishing a situation of association identification on the abnormal data according to the coupling characteristic of the electricity-heat-gas system, provided by the embodiment of the present invention;
Fig. 7 is a flow chart of a step of association identification on the abnormal data according to the coupling characteristic of the electricity-heat-gas system in the condition1 of Fig.6;
Fig. 8 is a flow chart of a step of association identification on the abnormal data according to the coupling characteristic of the electricity-heat-gas system in the condition 2 of Fig.6;
Fig. 9 is a flow chart of a step of association identification on the abnormal data according to the coupling characteristic of the electricity-heat-gas system in the condition 3 of Fig.6;
Fig. 10 is a flow chart of a stability evaluation method provided by the embodiment of the present invention;
Fig. 11 is a schematic diagram of a step of performing comprehensive solving on energy flow, provided by the embodiment of the present invention;
Fig. 12 is a flow chart of an energy flow solving method of a heat system, provided by the embodiment of the present invention;
Fig. 13 is a flow chart of static control strategies provided by the embodiment of the present invention;
Fig. 14 is a flow chart of a step of judging excess cost, provided by the embodiment of the present invention.

## DETAILED DESCRIPTION

The specific implementation mode of the present invention is further described in details through combination with drawings and an embodiment. The following embodiment is used for explaining the present invention, rather than limiting the scope of the present invention.

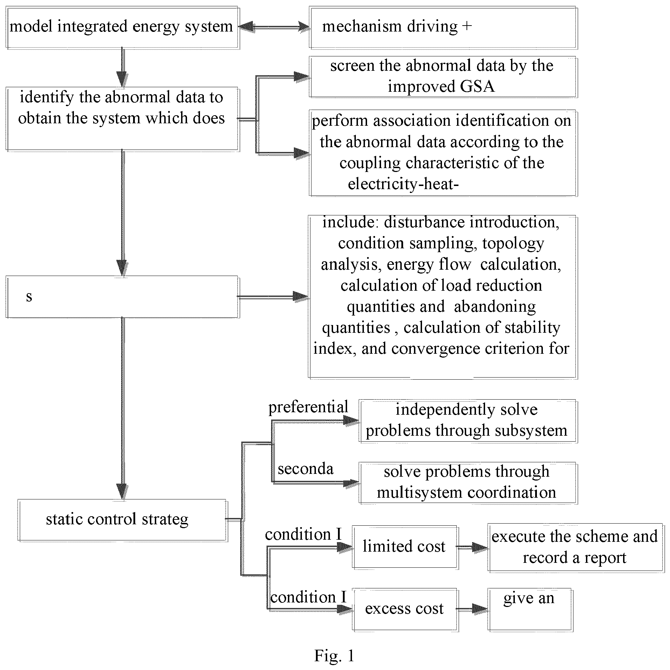

In order to overcome the deficiency in the prior art that multisystem coordinative control is not coordinatively considered comprehensively when coupling relationship between different energy subsystems and the uncertainty of loads are neglected in the modeling of a comprehensive energy system, the identification of abnormal data, stable evaluation methods and static control strategies, the embodiment provides a stability evaluation and static control method of an electricity-heat-gas integrated energy system, which is shown in Fig. 1. The specific method is described as follows:

S1, establishing a database according to site data or historical data, predicting load change with data driving, so as to model the electricity-heat-gas integrated energy system, and namely, model the electricity-heat-gas integrated energy system by a method combining data driving with mechanism driving;

wherein the loads of the integrated energy system comprise an electrical load, a heat load and a gas load, and the three common loads comprise an industrial load, an agricultural load, a transportation industry load, a people's living electrical load and the like; the three loads can be changed along with the change of user demands, and the change can cause impact on the modeling of the integrated energy system;

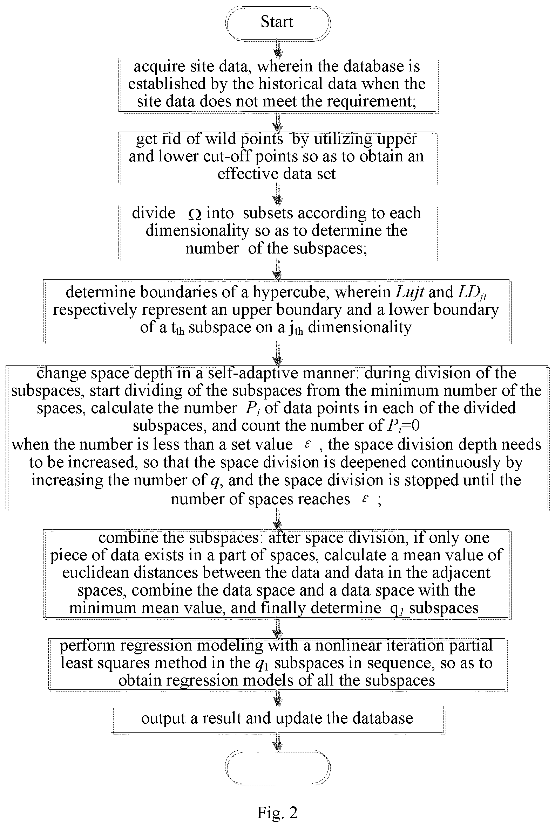

predicting the load change with data driving is shown in Fig. 2 and specifically comprises:

S1.1, acquiring site data for establishing the database, wherein the database is established by the historical data when the site data does not meet the requirement;

S1.2, making $X \in R^{M' \times d'}$, and getting rid of wild points according to the formula (1) by utilizing upper and lower cut-off points so as to obtain an effective data set $X \in \Omega$ ;

$$x_{ij} \notin \left[ M_{0.25j} - 1.5\left(M_{0.75j} - M_{0.25j}\right), M_{0.75j} + 1.5\left(M_{0.75j} - M_{0.25j}\right)\right] \qquad (1)$$

wherein, $R^{M' \times d'}$ represents an original historical data space, $X$ represents a historical data vector, $M_{qj}$ represents a quantile q of a $j_{th}$ variable in $X$, $d'$ represents the dimensionality of the data vector, $M'$ represents the number of original data vectors, $\Omega$ represents the processed historical data space, d represents the dimensionality of the data space $\Omega$, M represents the number of data vectors of the data space $\Omega$, i represents a serial number of the data vectors, $1 \le i \le M$, j represents a serial number of the dimensionality of the data vector, $1 \le j \le d$, $x_{ij}$ represents the numerical value of a $j_{th}$ variable in an $i_{th}$ data record, and Q represents the number of subspaces;

S1.3, dividing $\Omega$ into $q^j$ subsets according to each dimensionality, and assuming the maximum value and the minimum value of each dimensionality of $X_i$ as $X_{\max}^j$ and $X_{\min}^j$ , and $2 \le q^j \le Min\left(M, X_{\max}^j - X_{\min}^j\right)$, so as to determine the number $q^1, q^2,..., q^j$ of the subspaces;

S1.4, determining boundaries of a hypercube, wherein $LU_{jt}$ and $LD_{jt}$ respectively represent an upper boundary and a lower boundary of a t $(2 \le t \le q^j)_{th}$ subspace on a $j_{th}$ dimensionality, namely

$$LU_{jt} = \left\lfloor \frac{\left(X_{\max}^j - X_{\min}^j\right)(t+1)}{q^j} \right\rfloor \quad \text{and} \quad LD_{jt} = \left\lfloor \frac{\left(X_{\max}^j - X_{\min}^j\right)t}{q^j} \right\rfloor ;$$

S1.5, changing space depth in a self-adaptive manner: during division of the subspaces, starting dividing of the subspaces from the minimum number of the spaces and calculating the number $P_i$ of data points in each of the divided subspaces, $i = 1, 2, ..., q^1 or q^2 or ... or q^j$, namely that the number of the data points in the $q^1_{th}$ subspace is $P_i$, wherein i = 1,2,..., $q^j$, the number of the data points in the $q^j_{th}$ subspace is $P_i$, and i = 1,2,..., $q^j$; counting the number under a condition that $P_i = 0$, wherein the division of the subspaces is not fine enough when the number is less than a set value $\varepsilon$, the space division depth needs to be increased, so that the space division is deepened continuously by increasing the number of $q^j$, and the space division is stopped until the number of spaces reaches $\varepsilon$ ;

S1.6, combining the subspaces: after space division, if only one piece of data exists in a part of spaces, calculating a mean value of euclidean distances between the data and data in the adjacent spaces, combining the data space and a data space with the minimum mean value, and finally determining $q_1$ subspaces;

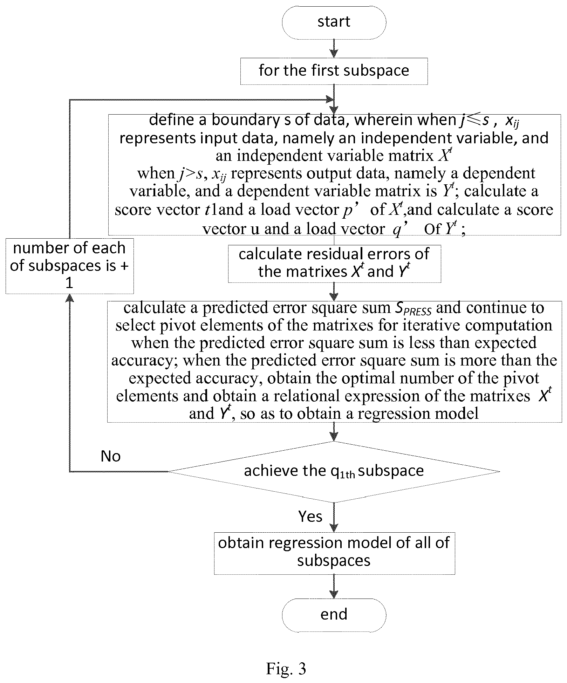

S1.7, performing regression modeling with a nonlinear iteration partial least squares method in the $q_1$ subspaces in sequence, so as to obtain regression models of all the subspaces, wherein a flow of regression modeling is shown in Fig. 3 and specifically comprises the following steps:

S1.7.1, defining a boundary s of data, wherein when $j \leq s$, $x_{ij}$ represents input data, namely an independent variable, and an independent variable matrix is $X^t$; when $j > s$, $x_{tj}$ represents output data, namely a dependent variable, and a dependent variable matrix is $Y^t$; calculating a score vector $t_1$ and a load vector $p'$ of $X^t$, and calculating a score vector $u$ and a load vector $q'$ of $Y^t$;

S1.7.2, calculating residual errors of the matrixes $X^t$ and $Y^t$, wherein the residual error of the matrix $X^t$ is $E = X^t - t_1p'$, and the residual error of the matrix $Y^t$ is $F = Y^t - uq'$;

S1.7.3, calculating a predicted error square sum $S_{PRESS}$ and continuing to select pivot elements of the matrixes for iterative computation when the predicted error square sum is less than expected accuracy; when the predicted error square sum is more than the expected accuracy, obtaining the optimal number of the pivot elements and obtaining a relational expression of the matrixes $X^t$ and $Y^t$, so as to obtain a regression model $Y^t = F_t(X^t)$ of the subspace; and

S1.7.4, continuing to calculate a regression model of the next subspace, and sequentially obtaining the regression models of all the subspaces.

S1.8, outputting a result and updating the database.

the integrated energy system comprises three loads: the electrical load, the heat load and the gas load; as shown in Fig. 2, the modeling methods of all the loads based on the data subspaces are the same, and the regression models of all the subspaces are finally obtained, so that the load change is predicted by utilizing data driving;

a step of modeling the integrated energy system by the method combining data driving with mechanism driving in the step S1 further comprises the following steps:

predicting the load change of an electric system with data driving, wherein
a mechanism model of the electric system is shown as follows:

$$
\begin{cases}
P_i^p = V_i^p \sum_{k=1}^{N} \sum_{m \in (a,b,c)} V_k^m \left( G_{ik}^{pm} \cos \theta_{ik}^{pm} + B_{ik}^{pm} \sin \theta_{ik}^{pm} \right) \\
Q_i^p = V_i^p \sum_{k=1}^{N} \sum_{m \in (a,b,c)} V_k^m \left( G_{ik}^{pm} \sin \theta_{ik}^{pm} - B_{ik}^{pm} \cos \theta_{ik}^{pm} \right)
\end{cases}
$$

wherein, $P_i^p$ and $Q_i^p$ respectively represent an active power net load and a reactive net load in a p phase at an i node, N represents the sum of nodes, $V_i^p$ represents voltage in the p phase at the i node, $V_k^m$ represents voltage in an m phase at a k node, $\cos \theta_{ik}^{pm}$ represents the phase angle difference of the p phase at the i node and the m phase at the k node, and $G_{ik}^{pm}$ and $B_{ik}^{pm}$ respectively represent conductivity and electrical susceptance between the p phase at the i node and the m phase at the k node;

relating the modeling $Y^t = F_t(X^t)$ of the load change with data driving with the mechanism model of the electric system, so as to meet the formula: $Y^t = F_t\left( X^t \right) = \sqrt{P_i^{p2} + Q_i^{p2}}$ ;

Predicting the load change of the natural gas system with data driving, wherein
a mechanism model of the natural gas system is shown as follows:

$$
A_{NGS} f + \omega = 0
$$

$$
Q_{pipe} = 5.72 * 10^{-4} \sqrt{\frac{(\Delta p) D^5}{f_r L S}}
$$

wherein, $A_{NGS}$ represents an association matrix of nodes and pipelines in the regional natural gas system, $f$ represents a flow vector of each of natural gas pipelines in the regional natural gas system, $\omega$ represents a net load vector of each of the nodes in the regional natural gas system, $Q_{pipe}$ represents volume flow of the pipelines, $\Delta p$ represents gas pressure drop, D represents the diameter of each of the pipelines, $f_r$ represents the friction coefficient of pipeline walls, L represents the length of each of the pipelines, and S represents the specific gravity of gas;

relating the modeling $Y^t = F_t(x^t)$ of the load change with data driving with the mechanism model of the natural gas system, so as to meet the formula: $Y^t = F_t(X^t) = \omega$;

predicting the load change of a heat system with data driving, wherein a mechanism model of the heat system is shown as follows:

$$\begin{cases} A_{DHS}\overrightarrow{m} = \overrightarrow{m_q} \\ B_{DHS}K\overrightarrow{m}\left|\overrightarrow{m}\right| = \sum_{j_1=1}^{n_{pipe}} B_{i_1 j_1} K_{j_1} \overrightarrow{m_{j_1}}\left|\overrightarrow{m_{j_1}}\right| = 0 \end{cases};$$

a hydraulic model:

$$\begin{cases} \phi = C_p \overrightarrow{m_q}\left(T_s - T_o\right) \\ T_{end} = \left(T_{start} - T_a\right)e^{-\frac{\lambda L}{C_p \overrightarrow{m}}} + T_a \\ \left(\sum \overrightarrow{m_{out}}\right)T_{out} = \sum\left(\overrightarrow{m_{in}}T_{in}\right) \end{cases}$$

a heat model:

wherein, $A_{DHS}$ represents an association matrix of nodes and pipelines in a regional heat system, $\overrightarrow{m}$ represents the mass flow rate of waterflow in the pipelines, $\overrightarrow{m_q}$ represents the mass flow rate of waterflow injected at the nodes, $i_1$ represents a loop label, $j_1$ represents a pipeline label, $B_{DHS}$ represents a loop association matrix for representing the relationship between a network loop and the pipelines, $K$ represents the resistance coefficient in the pipelines, $\phi$ represents heat power consumed by the heat load, $C_p$ represents the specific heat capacity of water, $T_s$ represents water supply temperature when a heat supply network enters each of nodes of the heat load, $T_o$ represents water outlet temperature of each of the nodes of the heat load, $T_o$ is a known quantity, $T_{start}$ represents the temperature of waterflow when the waterflow enters the pipelines, $T_{end}$ represents the temperature of the waterflow when the waterflow flows out of the pipelines, $T_a$ represents outdoor environment temperature, $\lambda$ represents the coefficient of heat conduction of the pipelines, L represents the length of each of the pipelines, $\overrightarrow{m_{out}}$ represents the mass flow rate of a water outlet pipeline, $\overrightarrow{m_{in}}$ represents the mass flow rate of a water inlet pipeline, $T_{out}$ represents the temperature of the water outlet pipeline, and $T_{in}$ represents the temperature of the water inlet pipeline;

relating the modeling $Y^t = F_t(X^t)$ of the load change with data driving with the mechanism model of the heat system, so as to meet the formula: $Y^t = F_t(X^t) = \phi$;

Predicting the load change in an energy coupling link with data driving, wherein a mechanism model of the energy coupling link is shown as follows:

$$L_1 = CP$$

wherein, $P$ and $L_1$ respectively represent an input vector and an output vector in the energy coupling link, and $C$ represents a coupling matrix; and

relating the modeling $Y^t = F_t(X^t)$ of the load change with data driving with the mechanism model of the energy coupling link, so as to meet the formula: $Y^t = F_t(X^t) = |L_1|$.

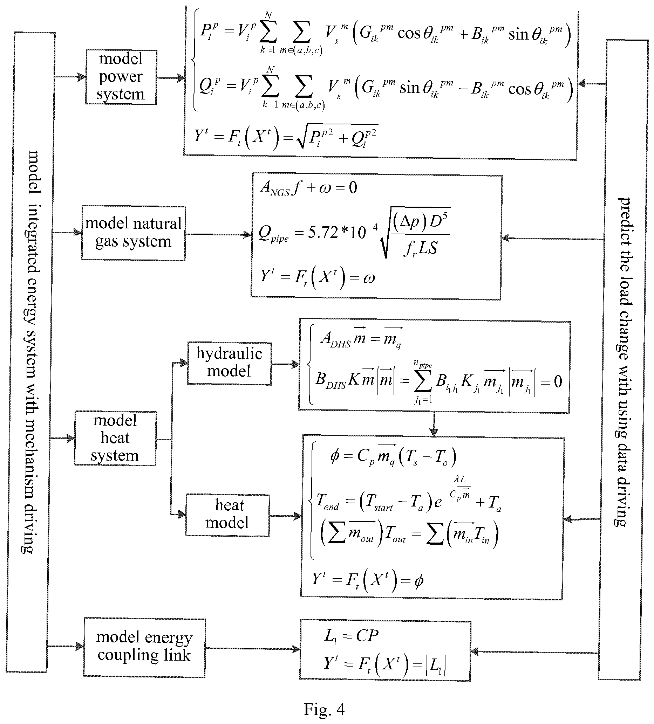

In the embodiment, a model of the integrated energy system combining data driving with mechanism driving is shown in Fig. 4;

in the actual operating process, some abnormal data always exists in the system due to errors in the data collection and transmission processes, and the abnormal data can cause great impact on people's production and life if the abnormal data cannot be identified timely;

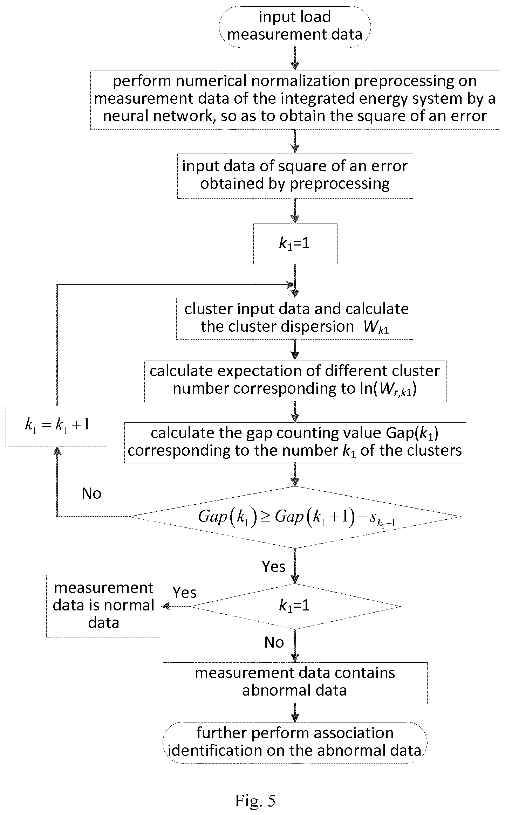

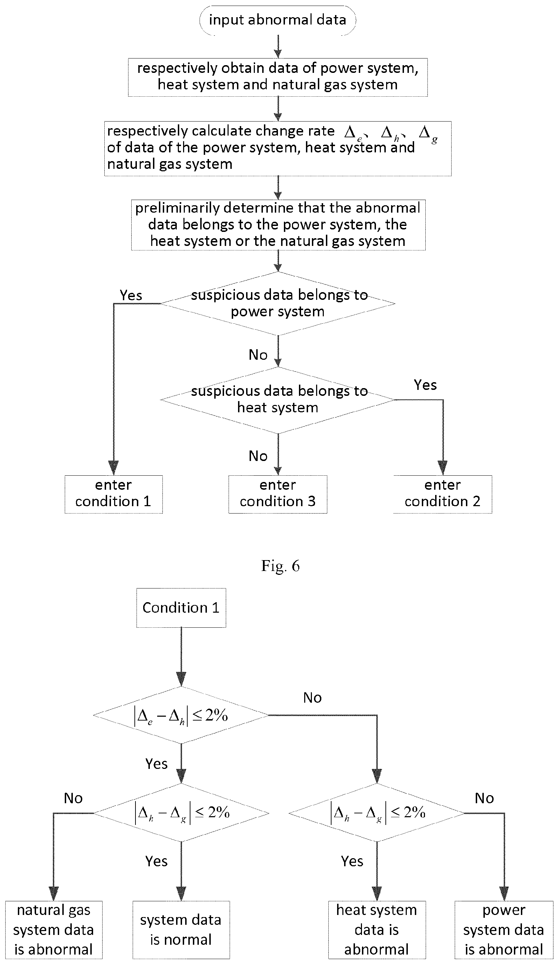

S2, identifying the abnormal data, screening the abnormal data by an improved GSA and performing association identification on the abnormal data according to the coupling characteristic of the electricity-heat-gas integrated energy system, wherein

the abnormal data is screened by utilizing the improved GSA, actually, the abnormal data is found out by utilizing a clustering algorithm, and a flow of screening the abnormal data is shown in Fig. 5; however, the abnormal data cannot be judged only by the improved GSA, the association identification also needs to be performed on the abnormal data through combination with the coupling characteristic of the electricity-heat-gas system, suspicious data belongs to different systems to form three different situations, which system has the abnormal data is further judged by an absolute value of the difference of three rates of change of system data according to a coupling relationship among the systems in every situation, and a flow of performing association identification on the abnormal data is shown in Fig. 6; the process of screening the abnormal data and the process of performing association identification on the abnormal data specifically comprise the following steps:

S2.1, screening the abnormal data through the improved GSA, which specifically comprises the following steps:

S2.1.1, performing numerical normalization preprocessing on measurement data of the integrated energy system, so as to obtain the square of an error;

S2.1.2, clustering input data and calculating the cluster dispersion $W_{k_1}$, wherein

$$W_{k_1} = \sum_{a=1}^{k_1} \frac{1}{2|C_a|} D_a ,$$

wherein, $|C_a|$ represents the number of data points contained in a cluster Ca, and $D_a$ represents the square sum of the distance between every two adjacent data points of all the data points in the cluster Ca;

S2.1.3, calculating the expectation $E(\ln(W_{r,k1}))$ of $\ln(W_{r,k1})$ of reference data corresponding to the measurement data when the number of clusters is $k_1$, wherein

$$E\left(\ln\left(W_{r,k_1}\right)\right) = (1/F) \sum_{a=1}^{F} \left(\ln\left(W_{r,k_1}\right)\right),$$

wherein, $F$ represents the number of classes of reference data sets generated according to uniform distribution within the normal scope of the data;

S2.1.4, calculating the gap counting value $Gap(k_1)$ corresponding to the number $k_1$ of the clusters, wherein the specific calculation formula is shown as follows:

$$Gap\left(k_1\right) = E\left(\ln\left(W_{r,k_1}\right)\right) - \ln\left(W_{k_1}\right);$$

the standard deviation $sd_{k1}$ of $\ln(W_{r,k1})$ and the standard deviation $s_{k1}$ of $E(\ln(W_{r,k1}))$ are calculated by the following formulas:

$$sd_{k_1} = \sqrt{\frac{1}{F} \sum_{a=1}^{F} \left[\ln\left(W_{r,k_1}\right) - E\left(\ln\left(W_{r,k_1}\right)\right)\right]^2} ;$$

$$s_{k_1} = sd_{k_1} \sqrt{1 + \frac{1}{F}} ;$$

S2.1.5, meeting the minimum $k_1$ value in an inequation $Gap(k_1) \geq Gap(k_1+1)\text{-}s_{k1+1}$, namely the optimal number of the clusters;

S2.1.6, judging whether the abnormal data exists in the input data according to the condition whether $k_1$ is equal to 1; determining that the abnormal data does not exist in the input data if $k_1$ is equal to 1; else, determining that the abnormal data exists in the input data;

S2.2, inputting the abnormal data screened in the step S2.1 and performing association identification on the abnormal data according to the coupling characteristic of the electricity-heat-gas integrated energy system;

S2.2.1, respectively acquiring real-time measured data of the electric system, the heat system and the natural gas system;

S2.2.2, respectively calculating the change rates $\Delta_e$, $\Delta_h$ and $\Delta_g$ of the real-time measurement data of the electric system, the heat system and the natural gas system according to the following formula (2):

$$\Delta = \frac{\text{data at this time} - \text{data at last time}}{\Delta t} \times 100\% \qquad (2)$$

S2.2.3, preliminarily determining that the abnormal data belongs to the electric system, or the heat system or the natural gas system according to the acquired data of the electric system, the heat system and the natural gas system;

S2.2.4, finally judging which system has the abnormal data by the following three inequations shown in the formulas (3), (4) and (5) according to the preliminary judgment of the abnormal data of every system:

$$\left| \Delta_e - \Delta_h \right| \leq 2\% \qquad (3)$$

$$\left| \Delta_h - \Delta_g \right| \leq 2\% \qquad (4)$$

$$\left| \Delta_e - \Delta_g \right| \leq 2\% \qquad (5)$$

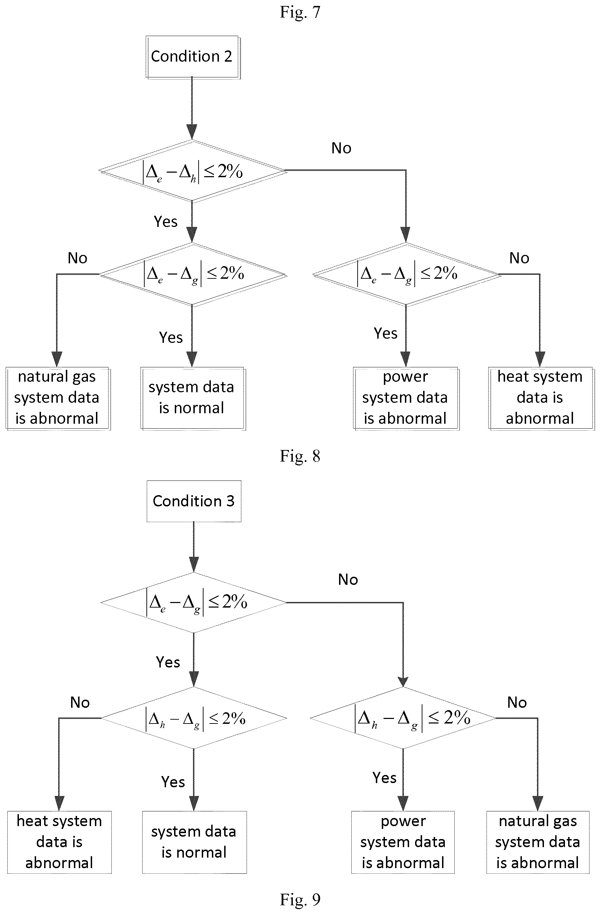

if preliminarily determining that the abnormal data belongs to the electric system, preliminarily determining that the abnormal data belongs to the condition 1, as shown in Fig. 7; firstly, judging whether $|\Delta_e\text{-}\Delta_h| \leq 2\%$ is met, if $|\Delta_e\text{-}\Delta_h| \leq 2\%$ is met, judging whether $|\Delta_h\text{-}\Delta_g| \leq 2\%$ is met, and if $|\Delta_h\text{-}\Delta_g| \leq 2\%$ is also met, determining that system data is normal; if $|\Delta_h\text{-}\Delta_g| \leq 2\%$ is not met, determining that the natural gas system data is abnormal; if $|\Delta_e\text{-}\Delta_h| \leq 2\%$ is not met, determining whether $|\Delta_h\text{-}\Delta_g| \leq 2\%$ is met, and if $|\Delta_h\text{-}\Delta_g| \leq 2\%$ is met, determining that the heat system data is abnormal; and if $|\Delta_h\text{-}\Delta_g| \leq 2\%$ is not met, determining that the electric system data is abnormal;
if preliminarily judging that the abnormal data belongs to the heat system, preliminarily determining that the abnormal data belongs to the condition 2, as shown in Fig.8; firstly, judging whether $|\Delta_e\text{-}\Delta_h| \leq 2\%$ is met, if $|\Delta_e\text{-}\Delta_h| \leq 2\%$ is met, judging whether $|\Delta_e\text{-}\Delta_g| \leq 2\%$ is met, if $|\Delta_e\text{-}\Delta_g| \leq 2\%$ is also met, determining that system data is normal; if $|\Delta_e\text{-}\Delta_g| \leq 2\%$ is not met, determining that the natural gas system data is abnormal; if $|\Delta_e\text{-}\Delta_h| \leq 2\%$ is not met, judging whether $|\Delta_e\text{-}\Delta_g| \leq 2\%$ is met, and if $|\Delta_e\text{-}\Delta_g| \leq 2\%$ is met, determining that the electric system data is abnormal; if $|\Delta_e\text{-}\Delta_g| \leq 2\%$ is not met, determining that the heat system data is abnormal;
if preliminarily judging that the abnormal data belongs to the natural gas system, preliminarily determining that the abnormal data belongs to the condition 3, as shown in Fig.9; firstly, judging whether $|\Delta_e\text{-}\Delta_g| \leq 2\%$ is met, if $|\Delta_e\text{-}\Delta_g| \leq 2\%$ is met, judging whether $|\Delta_h\text{-}\Delta_g| \leq 2\%$ is met, and if $|\Delta_h\text{-}\Delta_g| \leq 2\%$ is also met, determining that system data is normal; if $|\Delta_h\text{-}\Delta_g| \leq 2\%$ is not met, determining that the heat system data is abnormal; if $|\Delta_e\text{-}\Delta_g| \leq 2\%$ is not met, judging whether $|\Delta_h\text{-}\Delta_g| \leq 2\%$ is met, and if $|\Delta_h\text{-}A_g| \leq 2\%$ is met, determining that the electric system data is abnormal; and if $|\Delta_h\text{-}\Delta_g| \leq 2\%$ is not met, determining that the natural gas system data is abnormal;

S3, performing stability evaluation, comprising the following steps:
S3.1, reading initial state parameters of the integrated energy system, the sampling frequency is $k' = 1$, the out-of-limit frequency of energy flow is $m' = 0$, and the out-of-limit value of the energy flow at the $m'$th time is $A_{m'} = 0$;
S3.2, randomly selecting one disturbance from a contingency set and introducing the disturbance;
S3.3, sampling the states of system elements, the electrical/heat /gas load and the random variable corresponding to wind speed by a non-sequential Monte Carlo simulation method, so as to acquire the system state;
S3.4, performing topology analysis on an electricity-heat-gas interconnected system, so as to analyze the number of subsystems formed by connecting the nodes of the system by branches and coupling elements;
S3.5, calculating a system obtained after topology analysis according to an established energy flow model, wherein the energy flow model of an electricity-heat-natural gas system is shown in follows:

$$\begin{cases} f_{EPS}\left(x_e, x_g, x_h, x_{HES}\right) = 0 \\ f_{NGS}\left(x_e, x_g, x_h, x_{HES}\right) = 0 \\ f_{DHS}\left(x_e, x_g, x_h, x_{HES}\right) = 0 \\ f_{HES}\left(x_e, x_g, x_h, x_{HES}\right) = 0 \end{cases}$$

wherein, $f_{EPS}$, $f_{NGS}$, $f_{DHS}$ and $f_{HES}$ respectively represent energy flow equations of a regional electric system, a regional natural gas system, a regional heat system and an energy coupling link; $x_e$ represents a relevant variable of the energy flow of the regional electric system, such as voltage, current and a phase angle; $x_g$ represents a relevant variable of the energy flow of the regional natural gas system, such as pressure of nodes of natural gas and pipeline flux; $x_h$ represents a relevant variable of the energy flow of the regional heat system, such as the mass flow rate of the pipelines, water supply temperature and water return temperature; $x_{HES}$ represents a relevant variable of the energy coupling link, such as a distribution coefficient;

based on an integrated energy system model established in the step S1, the energy flow is integrally solved by a decoupling solving method, wherein the electric system adopts a forward-back substitution method for solving a power flow, the natural gas system adopts a Newton-Raphson method for solving the power flow, and the heat system adopts an energy flow solving method for solving the power flow;

the iteration process of the Newton-Raphson method is shown in follows:

$$\begin{cases} F\left(x_{fluid}^{(k_n)}\right) = J^{(k_n)} \Delta x_{fluid}^{(k_n)} \\ x_{fluid}^{(k_n+1)} = x_{fluid}^{(k_n)} - \Delta x_{fluid}^{(k_n)} \end{cases}$$

wherein, a first equation is an equation of a fluid part of the electricity-heat-natural gas system and comprises an energy flow equation of the natural gas system and a hydraulic equation of the heat system; $x_{fluid}^{(k_n)}$ represents a to-be-solved variable of the fluid part of the electricity-heat-natural gas system and comprises an energy flow model of the natural gas system and relevant variables in the hydraulic model of the heat system; $J^{(k_n)}$ represents a jacobi matrix obtained during $k_{n\,th}$ iteration by the Newton-Raphson method, and $\Delta x_{fluid}^{(k_n)}$ represents a modification vector at this time;

$$F\left(x_{fluid}^{(k_n)}\right) = \begin{bmatrix} f_{fluid1}\left[x_{g1}^{(k_n)}, x_{g2}^{(k_n)}, ..., x_{gn}^{(k_n)}\right] \\ f_{fluid2}\left[x_{g1}^{(k_n)}, x_{g2}^{(k_n)}, ..., x_{gn}^{(k_n)}\right] \\ \vdots \\ f_{fluidn}\left[x_{g1}^{(k_n)}, x_{g2}^{(k_n)}, ..., x_{gn}^{(k_n)}\right] \end{bmatrix}$$ is an error vector obtained through iteration by the Newton-Raphson method;

an energy flow solving method of the heat system specifically comprises the following steps:

solving the hydraulic model by the Newton-Raphson method, wherein the hydraulic model is specifically shown in the following formulas:

$$\begin{cases} A_{DHS}\,\vec{m} = \vec{m}_q \\ B_{DHS}K\vec{m}\left|\vec{m}\right| = \sum_{j_1=1}^{n_{pipe}} B_{i_1 j_1} K_{j_1}\,\vec{m}_{j_1}\left|\vec{m}_{j_1}\right| = 0 \end{cases} ;$$

solving the heat model according to the obtained mass flow rates of waterflow of all the pipelines, wherein the heat model is specifically shown in the following formulas:

$$\begin{cases} \phi = C_p\,\vec{m}_q\left(T_s - T_o\right) \\ T_{end} = \left(T_{start} - T_a\right)e^{-\frac{\lambda L}{C_p \vec{m}}} + T_a \\ \left(\sum \vec{m}_{out}\right)T_{out} = \sum\left(\vec{m}_{in}T_{in}\right) \end{cases} ;$$

obtaining the water supply temperature and the water returning temperature, judging whether the calculation result of the energy flow of the heat system meets operation constraint and accuracy requirements, if yes, outputting the calculation result, and else, repeating the above process, wherein

the operation constraint comprises an equality constraint and an inequality constraint, wherein an active balance equation and a reactive balance equation of the electric system, a flow balance equation of the natural gas system and a flow balance equation of the heat system form the equality constraint; the equality constraint is shown in the following five formulas:

$$P_{G,e} + P_{GAS,e} + P_{CHP,e} + P_{W,e} + C_{e,x} - P_{DEV,e} - \Delta P_{W,e} - P_{D,e} - P_e = 0, \ e = 1, 2, \ldots, N_e$$

$$Q_{G,e} + Q_{GAS,e} + Q_{CHP,e} + Q_{W,e} + Q_{C,e} - Q_{D,e} + C_{e,x}\cdot\frac{Q_{D,e}}{P_{D,e}} - Q_e = 0, \ e = 1, 2, \ldots, N_e$$

$$F_{G,g} + F_{DEV,g} + C_{g,y} - F_{GAS,g} - F_{CHP,g} - F_{D,g} - F_g = 0, \ g = 1, 2, \ldots, N_g$$

$$f_{G,h} + f_{DEV,h} + \frac{C_{h,z}}{GHV} + f_{CHP,h} - f_{D,h} - f_h = 0, \ h = 1, 2, \ldots, N_h$$

$$P_{CHP,z} = \frac{\left(H_{CHP,z} - C_{h,z}\right)}{v_{CHP,z}}, \ z = 1, 2, \ldots, N_b$$

wherein, $P_{G,e}$, $P_{GAS,e}$ and $P_{CHP,e}$, as well as $Q_{G,e}$, $Q_{GAS,e}$ and $Q_{CHP,e}$, respectively represent active output power and reactive output power of a non-fuel gas conventional unit, a fuel gas power generation unit and a fuel gas combined heat and power generation unit at a node $e$ of the electric system; $P_{D,e}$, $Q_{D,e}$, $P_e$ and $Q_e$ respectively represent an active load, a reactive load, injected active power and injected reactive power at the node $e$ of the electric system; $P_{W,e}$, $Q_{W,e}$ and $\Delta P_{W,e}$ respectively represent active power, reactive power and wind abandoning power of a wind power station at the node $e$ of the electric system; $Q_{C,e}$ and $P_{DEV,e}$ respectively represent reactive compensation power and consumed power of a device at node $e$ of the electric system; $C_{e,x}$ is the load reduction variable at the electrical load node $x$; $F_{GAS,g}$, $F_{CHP,g}$ and $F_{DEV,g}$ respectively represent consumed airflow of a fuel gas power generation unit and a fuel gas combined heat and power generation unit and injected airflow of the device at a node $g$ of the natural gas system; $F_{G,g}$, $F_{D,g}$ and $F_g$ respectively represent gas source injected airflow, the gas load and node injected airflow at the node $g$ of the natural gas system; $C_{g,y}$ represents a load reduction variable at a node g of the gas load; GHV represents the high calorific value of natural gas; $f_{CHP,h}$ and $f_{DEV,h}$ respectively represent waterflow generated by a fuel gas combined heat and power generation unit and injected waterflow of the device at a node h of the heat system; $f_{G,h}$, $f_{D,h}$ and $f_h$ respectively represent heat source injected waterflow, a heat load and node injected waterflow at the node h of the heat system; $C_{h,z}$ represents load reduction variable at a node z of the heat load; $N_e$, $N_g$ and $N_h$ respectively represent the sum of nodes of the electric system, the nodes of the natural gas system and the nodes of the heat system; $P_{CHP,z}$, $H_{CHP,z}$ and $v_{CHP,z}$ respectively represent active output power, the heat load and the heat-to-electric ratio of the fuel gas combined heat and power generation unit z; $N_b$ represents the sum of the fuel gas combined heat and power generation units;

the inequality constraint comprises upper/lower limit constraints of reduction variables and wind abandoning variables of the electrical load, the gas load and the heat load, an operation constraint of a fuel gas unit, a node pressure constraint of the natural gas system, a gas source injected gas volume constraint, a compression ratio constraint of a compressor, a node pressure constraint of the electric system, an output power constraint of the non-fuel gas conventional unit and a line power constraint, wherein the inequality constraint is specifically shown as follows:

$$0 \le C_{e,x} \le P_{D,e}, \ x = 1,2,\ldots,N_d$$

$$0 \le \frac{C_{g,y}}{GHV} \le F_{D,g}, \ y = 1,2,\ldots,N_g$$

$$0 \le C_{h,z} \le H_{CHP,z}, \ z = 1,2,\ldots,N_b$$

$$0 \le \Delta P_{W,v} \le P_{W,v}, \ v = 1,2,\ldots,N_w$$

$$P_{GAS,z}^{\min} \le P_{GAS,z} \le P_{GAS,z}^{\max}, \ z = 1,2,\ldots,N_a$$

$$Q_{GAS,z}^{\min} \le Q_{GAS,z} \le Q_{GAS,z}^{\max}, \ z = 1,2,\ldots,N_a$$

$$P_{CHP,z}^{\min} \le P_{CHP,z} \le P_{CHP,z}^{\max}, \ z = 1,2,\ldots,N_b$$

$$Q_{CHP,z}^{\min} \le Q_{CHP,z} \le Q_{CHP,z}^{\max}, \ z = 1,2,\ldots,N_b$$

$$\pi_g^{\min} \le \pi_g \le \pi_g^{\max}, \ g = 1,2,\ldots,N_g$$

$$F_{G,g}^{\min} \le F_{G,g} \le F_{G,g}^{\max}, \ g = 1,2,\ldots,N_s$$

$$R_r^{\min} \le R_r \le R_r^{\max}, \ r = 1,2,\ldots,N_p$$

$$V_e^{\min} \le V_e \le V_e^{\max}, \ e = 1,2,\ldots,N_e$$

$$P_{G,e}^{\min} \le P_{G,e} \le P_{G,e}^{\max}, \ e = 1,2,\ldots,N_u$$

$$Q_{G,e}^{\min} \le Q_{G,e} \le Q_{G,e}^{\max}, \ e = 1,2,\ldots,N_u$$

$$-T_l^{\min} \le T_l \le T_l^{\max}, \ l = 1, 2, \ldots, N_r$$

$$\overrightarrow{m_n^{\min}} \le \overrightarrow{m_n} \le \overrightarrow{m_n^{\max}}, \ n = 1, 2, \ldots, N_t$$

wherein, $\pi_g$ represents the pressure at the node $g$ of the natural gas system; $R_r$ represents the compression ratio of a compressor branch r; $T_l$ represents the power flowing through an electric transmission line $l$; $\overrightarrow{m_n}$ represents the mass flow rate of the pipelines in the heat system, and $\overrightarrow{m_n^{\max}}$ and $\overrightarrow{m_n^{\min}}$ respectively represent an upper limit and a lower limit; $N_t$ represents the sum of hot water pipeline, and $N_s$, $N_u$ and $N_r$ respectively represent the sum of gas sources of natural gas, non-fuel gas conventional units and electric transmission lines; $N_d$, $N_g$ and $N_b$ respectively represent the sum of the nodes of the electrical load, the nodes of the gas load and the fuel gas combined heat and power generation units; $N_a$ represents the sum of the fuel gas power generation units; $N_p$ represents the sum of the compressor branches; $V_e$ represents the voltage at the node $e$ of the electric system; and $N_w$ represents the sum of the wind power stations.

S3.6, judging whether the energy flow is out of limit according to the calculation result of the energy flow model, wherein the number of out-of-limit frequency is $m'+1$ if yes; then recording the out-of-limit value $A_{m'}$ and the out-of-limit time $t_{m'}$ at the time and executing the step S3.7; directly executing the step S3.8 if not;

S3.7, establishing an optimized model consisting of nonlinear optimization problems for the state of the system having problems, and calculating the reduction quantities and the wind abandoning quantities of an electrical load, a gas load and a heat load by utilizing the optimized model, wherein the optimized model is effectively solved by an interior point method;

the optimized model is specifically shown as follows:

the established optimized model takes the minimum value of the sum of the reduction quantities and the wind abandoning quantities of the electrical load, the gas load and the heat load as an optimized target, and an objective function is shown as follows:

$$\min f = \sum_{i=1}^{N_d} \lambda_{e,x} C_{e,x} + \sum_{m=1}^{N_g} \lambda_{g,y} C_{g,y} + \sum_{k=1}^{N_b} \lambda_{h,z} C_{h,z} + \sum_{i=1}^{N_w} \lambda_{w,v} \Delta P_{w,v}$$

wherein, $C_{e,x}$, $C_{g,y}$ and $C_{h,z}$ respectively represent the load reduction variables of the node $x$ of the electrical load, the node $y$ of the gas load and the fuel gas combined heat and power generation unit z; $\Delta P_{w,v}$ represents the wind abandoning variable of a wind power station v; $N_d$ and $N_g$ respectively represent the sum of the nodes of the electrical load and the nodes of the gas load; $\lambda_{e,x}$, $\lambda_{g,y}$, $\lambda_{h,z}$ and $\lambda_{w,v}$ respectively represent weight factors representing the significance of the electrical load, the gas load and the heat load and the wind abandoning severity of all the wind power stations;

the operation constraint in the step S3.5 is used as a constraint condition of the optimized model and comprises the equality constraint consisting of the active balance equation and the reactive balance equation of the electric system, the flow balance equation of the natural gas system and the flow balance equation of the heat system and the inequality constraint consisting of the upper/lower limit constraints of the reduction variables and the wind abandoning variables of the electrical load, the gas load and the heat load, the operation constraint of the fuel gas unit, the node pressure constraint of the natural gas system, the gas source injected gas volume constraint, the compression ratio constraint of the compressor, the node pressure constraint of the electric system, the output power constraint of the non-fuel gas conventional unit and the line power constraint;

in the specific implementation, some other constraints are possibly added on the basis according to specific regions and equipment, which is specifically determined according to specific situations;

S3.8, judging whether the sampling frequency $k'$ is equal to the maximum sampling frequency, if yes, calculating a stability index and outputting a stability evaluation result, and else, repeating the steps S3.2-S3.6;

the step of calculating the stability index comprises the following steps:

$$p_y' = \frac{\sum\limits_{m'=1}^{m'_{max}} \int A_{m'} dt_{m'}}{\sum\limits_{m'=1}^{m'_{max}} E \cdot t_{m'}} \times 100\% \; ,$$

out-of-limit degree:

wherein, $A_{m'}$ represents the out-of-limit degree of the energy flow at the $m'_{th}$ time, $t_{m'}$ represents the out-of-limit time of the energy flow at the $m'_{th}$ time, E represents the total energy of the electricity-heat-gas system, and $m'_{max}$ represents the total number of out-of-limit frequency of the energy flow;

$$q_y' = \frac{m'_{max}}{N} \times 100\% \; ,$$

out-of-limit ratio:

wherein, $N$ represents the sampling frequency;

the stability of the system is evaluated according to the value of $(p_y', q_y')$, evaluation standard scores are given according to a stability evaluation standard comparison table which is shown in Tab. 1, and the full score is 10;

Table 1

| Condition | Evaluation Score |
|---|---|
| $pq \le 0.04\%$ | 10 |
| $0.04\% < pq \le 0.25\%$ | 9 |
| $0.25\% < pq \le 1\%$ | 8 |
| $1\% < pq \le 2.25\%$ | 7 |
| $2.25\% < pq \le 4\%$ | 6 |
| $4\% < pq \le 6.25\%$ | 5 |
| $6.25\% < pq \le 9\%$ | 4 |
| $9\% < pq \le 12.25\%$ | 3 |
| $12.25\% < pq \le 16\%$ | 2 |
| $16\% < pq \le 25\%$ | 1 |
| $pq > 25\%$ | 0 |

wherein the sampling frequency is determined according the specific situations, the sampling frequency cannot be too small, and the sampling frequency can ensure sampling to have a certain representativeness.

The difference of time scales needs to be considered for calculation of the stability index, specifically, for the heat load, calculation of the index needs to be modified, and the modification of the stability index of the heat load comprises the following steps: determining that the temperature is constant when no disturbance exists and determining that the energy flow is out of limit if the temperature of the heat load is lower than the lower temperature limit or higher than the upper temperature limit in some time period, wherein the time period is a part of the total lasting time that the energy flow is out of limit or is not restrained after disturbance appears;

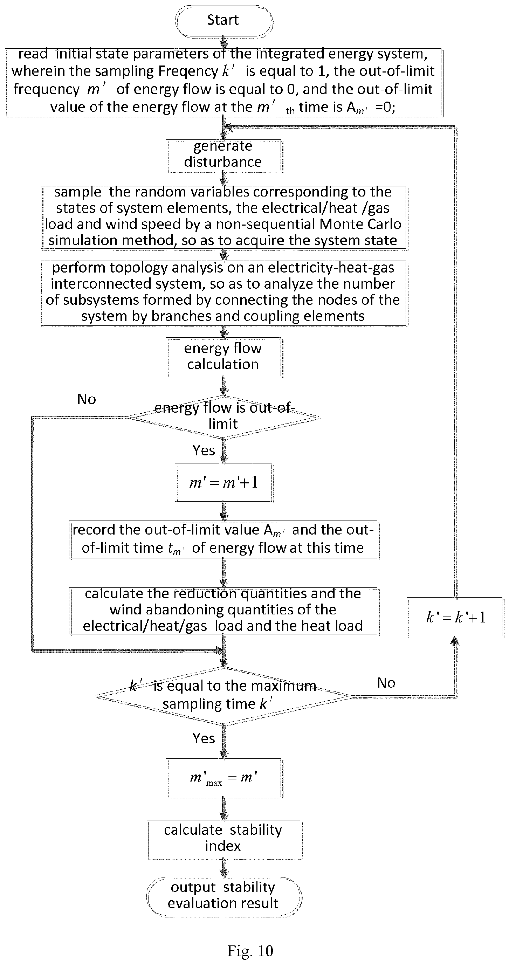

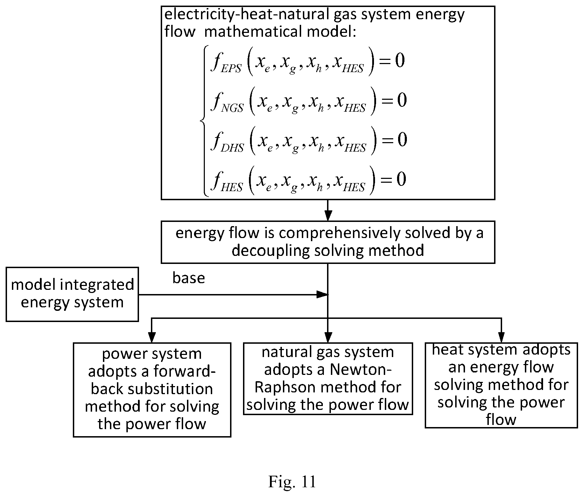

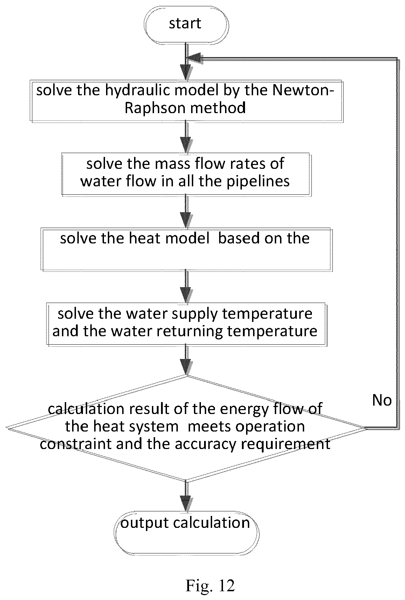

in the specific implementation, the out-of-limit degree and the out-of-limit frequency at certain sampling frequency are considered for the stability of the system; the detailed process of the stability evaluation of the system is shown in Fig. 10, and the stability evaluation of different subsystems is performed by adopting different methods in the flow chart; a process of comprehensively solving the energy flow is shown in Fig. 11; a flow of a solving method of the energy flow of the heat system is shown in Fig. 12;

wherein the two stability indexes: the out-of-limit degree and the out-of-limit ratio are considered in a stability evaluation standard, the stability evaluation score of the system is reduced only if one of the two indexes is comparatively big, the system is comparatively stable only if the two indexes are both very small, and the two indexes can be reduced to the lowest as far as possible in the actual application;

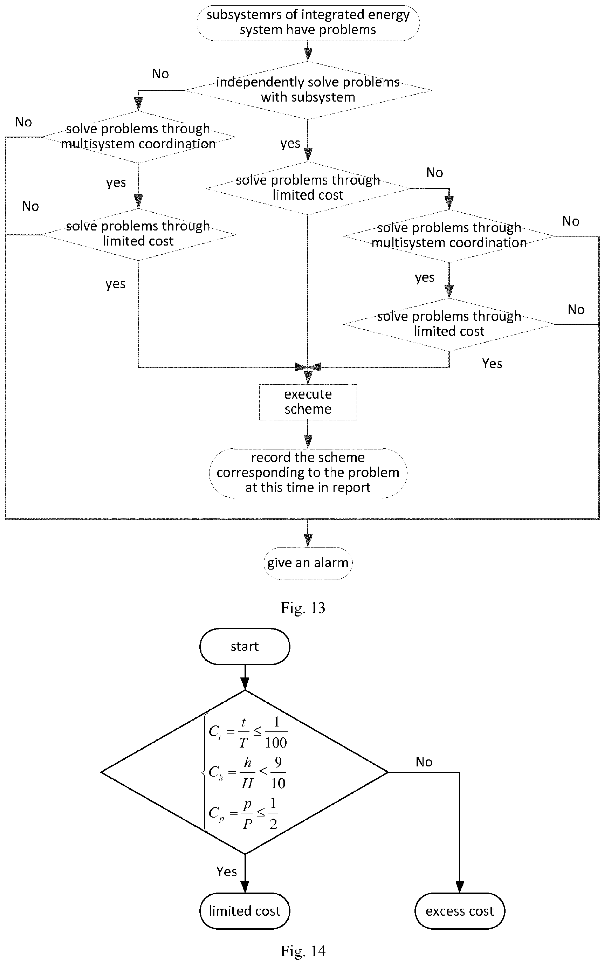

S4, performing static control on the electricity-heat-gas integrated energy system according to a stability evaluation result, wherein the static control comprises two strategies: a strategy of independently solving the problems with each subsystem and a strategy of solving the problems through multisystem coordination; for the strategy of solving the problems through multisystem coordination, a thought of multi-gent coordinative work is adopted, the electricity-heat-gas integrated energy system is coordinatively controlled according to the specific situations, the system can be recovered to the normal operating state by controlling the multiple subsystems and by virtue of the close coupling relationship among the subsystems when the system cannot be recovered to the normal operation state by controlling one subsystem; and the two strategies have two output results finally: a result of executing a solving scheme and recording a report, and a result of giving an alarm, and whether the problems can be solved at limited cost according to the standards of the output results is judged. a flow of the static control strategies is shown in Fig. 13;

wherein the limited cost comprises time cost, human cost and capital cost which are shown in the following three formulas:

time cost:
$$C_{t''} = \frac{t''}{T''};$$

human cost:
$$C_{h''} = \frac{h''}{H''};$$

capital cost:
$$C_{p''} = \frac{p''}{P''};$$

wherein, $C_{t''}$ represents the time cost, $t''$ represents the time from a process of causing problem, to a process of solving the problem and to a process of recovering to be normal of the system, and $T''$ represents the time from problem causing of the system at the last time to the problem causing of the system at this time; $C_{h''}$ represents the human cost, $h''$ represents the number of persons for solving the problems, and $H''$ represents the number of workers for normal work of the system; $C_{p''}$ represents the capital cost, $p''$ represents the amount of capitals required for solving the problems, and $P''$ represents the amount of capitals required for annual mean maintenance of the system; and

the cost belongs to the limited cost only when all the three formulas meet the inequality constraints shown as follows, and the cost belong to the excess cost otherwise:

$$\begin{cases} C_{t''} = \dfrac{t''}{T''} \le \dfrac{1}{100} \\ C_{h''} = \dfrac{h''}{H''} \le \dfrac{9}{10} \\ C_{p''} = \dfrac{p''}{P''} \le \dfrac{1}{2} \end{cases} \circ$$

a flow of judging the excess cost is shown in Fig. 14; for the static control strategies of the integrated energy system, on one hand, the strategy of independently solving the problems through every subsystem is considered preferentially, and then the strategy of solving the problems through multisystem coordination is considered if the problems cannot be solved by every subsystem independently; on the other hand, if the problems can be solved at the limited cost, the scheme is executed, and the report is recorded; if the problems can be solved only by the excess cost, the alarm needs to be given;

specifically, the strategy for independently solving the problems with every subsystem refers to independently controlling key parts of every subsystem, such as a valve and nodes, to enable the system to be recovered to the normal operating state; the strategy for solving the problems through multisystem coordination refers to controlling of the multiple subsystems to enable the system to be recovered to the normal operating state by virtue of the close coupling relationship among the subsystems when the system cannot be recovered to the normal operation state by controlling one subsystem.

Finally, it should be noted that the above embodiment is only used for illustrating the technical scheme of the present invention, rather than limiting the present invention; those ordinary skills in the field should understand that the technical scheme recorded in the embodiment can still be modified, or the part of the technical features or all the technical features can be equivalently replaced with the present invention is illustrated in details with reference to the above embodiment; and the essence of the corresponding technical scheme does not depart from the scope limited by the claims of the present invention due to the modification or replacement.

**Claims**

1. A stability evaluation and static control method of an electricity-heat-gas integrated energy system, **characterized by** comprising the following steps:

S1, establishing a database according to site data or historical data, predicting load change with data driving, so as to model the electricity-heat-gas integrated energy system, and namely, model the electricity-heat-gas integrated energy system by a method combining data driving with mechanism driving;

S2, identifying abnormal data, screening the abnormal data by an improved GSA and performing association identification on the abnormal data according to the coupling characteristics of the electricity-heat-gas integrated energy system;

S3, performing stability evaluation, comprising the following steps:

S3.1, reading initial state parameters of the integrated energy system, the sampling frequency is $k' = 1$, the out-of-limit frequency of energy flow is $m' = 0$, and the out-of-limit value of the energy flow at the $m'_{th}$ time is $A_{m'} = 0$;

S3.2, randomly selecting one disturbance from a contingency set and introducing the disturbance;

S3.3, sampling random variables corresponding to the state of system elements, the electrical/heat /gas load and wind speed by a non-sequential Monte Carlo simulation method, so as to acquire the system state;

S3.4, performing topology analysis on an electricity-heat-gas interconnected system, so as to analyze the number of subsystems formed by connecting the nodes of the system by branches and coupling elements;

S3.5, calculating a system obtained after topology analysis according to an established energy flow model, wherein

the energy flow model of an electricity-heat-natural gas system is shown in follows:

$$\begin{cases} f_{EPS}\left(x_e, x_g, x_h, x_{HES}\right) = 0 \\ f_{NGS}\left(x_e, x_g, x_h, x_{HES}\right) = 0 \\ f_{DHS}\left(x_e, x_g, x_h, x_{HES}\right) = 0 \\ f_{HES}\left(x_e, x_g, x_h, x_{HES}\right) = 0 \end{cases}$$

wherein, $f_{EPS}$, $f_{NGS}$, $f_{DHS}$ and $f_{HES}$ respectively represent energy flow equations of a regional power system, a regional natural gas system, a regional heat system and an energy coupling link; $x_e$ represents a relevant variable of the energy flow of the regional power system; $x_g$ represents a relevant variable of the energy flow of the regional natural gas system; $x_h$ represents a relevant variable of the energy flow of the regional heat system; $x_{HES}$ represents a relevant variable of the energy flow of the energy coupling link;

based on an integrated energy system model established in the step S1, the energy flow is integrally solved by a decoupling solving method, wherein the power system adopts a forward-back substitution method for solving a power flow, the natural gas system adopts a Newton-Raphson method for solving the power flow, and the heat system adopts an energy flow solving method for solving the power flow;

S3.6, judging whether the energy flow is out of limit according to the calculation result of the energy flow model, wherein the number of out-of-limit frequency is $m'+1$ if yes; then recording the out-of-limit value $A_{m'}$ and the out-of-limit time $t_{m'}$ at the time and executing the step S3.7; directly executing the step S3.8 if not;

S3.7, establishing an optimized model consisting of nonlinear optimization problems for the state of the system having problems, and calculating the reduction quantities and the wind abandoning quantities of an electrical load, a gas load and a heat load by utilizing the optimized model, wherein the optimized model is effectively solved by an interior point method;

S3.8, judging whether the sampling frequency $k'$ is equal to the maximum sampling frequency, if yes, calculating a stability index and outputting a stability evaluation result, and else, repeating the steps S3.2-S3.6;

S4, performing static control on the electricity-heat-gas integrated energy system according to a stability evaluation result, wherein the static control comprises two strategies: a strategy of independently solving the problems with each subsystem and a strategy of solving the problems through multisystem coordination; for the strategy of solving the problems through multisystem coordination, a thought of multi-gent coordinative work is adopted, the electricity-heat-gas integrated energy system is coordinatively controlled according to the specific situations, the system can be recovered to the normal operating state by controlling the multiple subsystems and by virtue of the close coupling relationship among the subsystems when the system cannot be recovered to the normal operation state by controlling one subsystem; and the two strategies have two output results finally: a result of executing a solving scheme and recording a report, and a result of giving an alarm, and whether the problems can be solved at limited cost according to the standards of the output results is judged.

2. The stability evaluation and static control method of the electricity-heat-gas integrated energy system according to claim 1, **characterized in that** in the step S1, predicting the load change with data driving further comprises the following steps:

S1.1, acquiring site data for establishing the database, wherein the database is established by the historical data when the site data does not meet the requirement;
S1.2, making $X \in R^{M' \times d'}$, and getting rid of wild points according to the formula (1) by utilizing upper and lower cut-off points so as to obtain an effective data set $X \in \Omega$;

$$x_{ij} \notin \left[ M_{0.25j} - 1.5\left(M_{0.75j} - M_{0.25j}\right), M_{0.75j} + 1.5\left(M_{0.75j} - M_{0.25j}\right)\right] \qquad (1)$$

wherein, $R^{M' \times d'}$ represents an original historical data space, $X$ represents a historical data vector, $M_{qj}$ represents a quantile q of a $j_{th}$ variable in $X$, $d'$ represents the dimensionality of the data vector, $M'$ represents the number of original data vectors, $\Omega$ represents the processed historical data space, d represents the dimensionality of the data space $\Omega$, M represents the number of data vectors of the data space $\Omega$, i represents a serial number of the data vectors, $1 \leq i \leq M$, j represents a serial number of the dimensionality of the data vector, $1 \leq j \leq d$, $x_{ij}$ represents the numerical value of a $j_{th}$ variable in an $i_{th}$ data record, and Q represents the number of subspaces;
S1.3, dividing $\Omega$ into $q^j$ subsets according to each dimensionality, and assuming the maximum value and the minimum value of each dimensionality of $X_i$ as $X^j_{max}$ and $X^j_{min}$, and $2 \leq q^j \leq Min\left(M, X^j_{max} - X^j_{min}\right)$, so as to determine the number $q^1, q^2,..., q^j$ of the subspaces;
S1.4, determining boundaries of a hypercube, wherein $LU_{jt}$ and $LD_{jt}$ respectively represent an upper boundary and a lower boundary of a $t(2 \leq t \leq q^j)_{th}$ subspace on a $j_{th}$ dimensionality, namely

$$LU_{jt} = \left\lfloor \frac{\left(X^j_{max} - X^j_{min}\right)(t+1)}{q^j} \right\rfloor \qquad LD_{jt} = \left\lfloor \frac{\left(X^j_{max} - X^j_{min}\right)t}{q^j} \right\rfloor ;$$

and

S1.5, changing space depth in a self-adaptive manner: during division of the subspaces, starting dividing of the subspaces from the minimum number of the spaces and calculating the number $P_i$ of data points in each of the divided subspaces, $i = 1,2,..., q^1 or q^2$ or ... $or q^j$, namely that the number of the data points in the $q^1_{th}$ subspace is $P_i$, wherein $i = 1,2,...,q^j$, the number of the data points in the $q^j_{th}$ subspace is $P_i$, and $i = 1,2,...,q^j$; counting the number under a condition that $P_i=0$, wherein the division of the subspaces is not fine enough when the number is less than a set value $\varepsilon$, the space division depth needs to be increased, so that the space division is deepened continuously by increasing the number of $q^j$, and the space division is stopped until the number of spaces reaches $\varepsilon$;
S1.6, combining the subspaces: after space division, if only one piece of data exists in a part of spaces, calculating a mean value of euclidean distances between the data and data in the adjacent spaces, combining the data space and a data space with the minimum mean value, and finally determining $q_1$ subspaces;
S1.7, performing regression modeling with a nonlinear iteration partial least squares method in the $q_1$ subspaces in sequence, so as to obtain regression models of all the subspaces; and
S1.8, outputting a result and updating the database.

3. The stability evaluation and static control method of the electricity-heat-gas integrated energy system according to claim 2, **characterized in that** regression modeling in the step S1.7 further comprises the following steps:

S1.7.1, defining a boundary s of data, wherein when $j \le s$, $x_{ij}$ represents input data, namely an independent variable, and an independent variable matrix is $X^t$; when $j > s$, $x_{ij}$ represents output data, namely a dependent variable, and a dependent variable matrix is $Y^t$; calculating a score vector $t_1$ and a load vector $p'$ of $X^t$, and calculating a score vector u and a load vector $q'$ of $Y^t$;

S1.7.2, calculating residual errors of the matrixes $X^t$ and $Y^t$, wherein the residual error of the matrix $X^t$ is $E = X^t - t_1 p'$, and the residual error of the matrix $Y^t$ is $F = Y^t - uq'$;

S1.7.3, calculating a predicted error square sum $S_{PRESS}$ and continuing to select pivot elements of the matrixes for iterative computation when the predicted error square sum is less than expected accuracy; when the predicted error square sum is more than the expected accuracy, obtaining the optimal number of the pivot elements and obtaining a relational expression of the matrixes $X^t$ and $Y^t$, so as to obtain a regression model $Y^t = F_t(X^t)$ of the subspace; and

S1.7.4, continuing to calculate a regression model of the next subspace, and sequentially obtaining the regression models of all the subspaces.

4. The stability evaluation and static control method of the electricity-heat-gas integrated energy system according to claim 3, **characterized in that** a step of modeling the integrated energy system by the method combining data driving with mechanism driving in the step S1 further comprises:

predicting the load change of a power system with data driving, wherein
a mechanism model of the power system is shown as follows:

$$\begin{cases} P_i^p = V_i^p \sum_{k=1}^{N} \sum_{m \in (a,b,c)} V_k^m \left( G_{ik}^{pm} \cos \theta_{ik}^{pm} + B_{ik}^{pm} \sin \theta_{ik}^{pm} \right) \\[4mm] Q_i^p = V_i^p \sum_{k=1}^{N} \sum_{m \in (a,b,c)} V_k^m \left( G_{ik}^{pm} \sin \theta_{ik}^{pm} - B_{ik}^{pm} \cos \theta_{ik}^{pm} \right) \end{cases}$$

wherein, $P_i^p$ and $Q_i^p$ respectively represent an active power net load and a reactive net load in a p phase at an i node, N represents the sum of nodes, $V_i^p$ represents voltage in the p phase at the i node, $V_k^m$ represents voltage in an m phase at a k node, $\cos\theta_{ik}^{pm}$ represents the phase angle difference of the p phase at the i node and the m phase at the k node, and $G_{ik}^{pm}$ and $B_{ik}^{pm}$ respectively represent conductivity and electrical susceptance between the p phase at the i node and the m phase at the k node;

relating the modeling $Y^t = F_t(X^t)$ of the load change with data driving with the mechanism model of the power system, so as to meet the formula:

$$Y^t = F_t\left(X^t\right) = \sqrt{P_i^{p2} + Q_i^{p2}} \ ;$$

predicting the load change of the natural gas system with data driving, wherein
a mechanism model of the natural gas system is shown as follows:

$$A_{NGS} f + \omega = 0$$

$$Q_{pipe} = 5.72 * 10^{-4} \sqrt{\frac{(\Delta p) D^5}{f_r LS}}$$

wherein, $A_{NGS}$ represents an association matrix of nodes and pipelines in the regional natural gas system, $f$ represents a flow vector of each of natural gas pipelines in the regional natural gas system, $\omega$ represents a net load vector of each of the nodes in the regional natural gas system, $Q_{pipe}$ represents volume flow of the pipelines, $\Delta p$ represents gas pressure drop, D represents the diameter of each of the pipelines, $f_r$ represents the friction coefficient of pipeline walls, L represents the length of each of the pipelines, and S represents the specific gravity of gas;

relating the modeling $Y^t = F_t(X^t)$ of the load change with data driving with the mechanism model of the natural gas system, so as to meet the formula: $Y^t = F_t(X^t) = \omega$;
predicting the load change of a heat system with data driving, wherein a mechanism model of the heat system is shown as follows:

$$\begin{cases} A_{DHS}\,\overrightarrow{m} = \overrightarrow{m_q} \\ B_{DHS}K\overrightarrow{m}\left|\overrightarrow{m}\right| = \displaystyle\sum_{j_1=1}^{n_{pipe}} B_{i_1 j_1} K_{j_1} \overrightarrow{m_{j_1}}\left|\overrightarrow{m_{j_1}}\right| = 0 \end{cases};$$

a hydraulic model:

$$\begin{cases} \phi = C_p \overrightarrow{m_q}\left(T_s - T_o\right) \\ T_{end} = \left(T_{start} - T_a\right)e^{-\frac{\lambda L}{C_p \overrightarrow{m}}} + T_a \\ \left(\sum \overrightarrow{m_{out}}\right)T_{out} = \sum \left(\overrightarrow{m_{in}}T_{in}\right) \end{cases}$$

a heat model:
wherein, $A_{DHS}$ represents an association matrix of nodes and pipelines in a regional heat system, $\overrightarrow{m}$ represents the mass flow rate of waterflow in the pipelines, $\overrightarrow{m_q}$ represents the mass flow rate of waterflow injected at the nodes, $i_1$ represents a loop label, $j_1$ represents a pipeline label, $B_{DHS}$ represents a loop association matrix for representing the relationship between a network loop and the pipelines, $K$ represents the resistance coefficient in the pipelines, $\phi$ represents heat power consumed by the heat load, $C_p$ represents the specific heat capacity of water, $T_s$ represents water supply temperature when a heat supply network enters each of nodes of the heat load, $T_o$ represents water outlet temperature of each of the nodes of the heat load, $T_o$ is a known quantity, $T_{start}$ represents the temperature of waterflow when the waterflow enters the pipelines, $T_{end}$ represents the temperature of the waterflow when the waterflow flows out of the pipelines, $T_a$ represents outdoor environment temperature, $\lambda$ represents the coefficient of heat conduction of the pipelines, L represents the length of each of the pipelines, $\overrightarrow{m_{out}}$ represents the mass flow rate of a water outlet pipeline, $\overrightarrow{m_{in}}$ represents the mass flow rate of a water inlet pipeline, $T_{out}$ represents the temperature of the water outlet pipeline, and $T_{in}$ represents the temperature of the water inlet pipeline;
relating the modeling $Y^t = F_t(X^t)$ of the load change with data driving with the mechanism model of the heat system, so as to meet the formula: $Y^t = F_t(X^t) = \phi$;
predicting the load change in an energy coupling link with data driving, wherein a mechanism model of the energy coupling link is shown as follows:

$$L_1 = CP$$

wherein, $P$ and $L_1$ respectively represent an input vector and an output vector in the energy coupling link, and $C$ represents a coupling matrix; and
relating the modeling $Y^t = F_t(X^t)$ of the load change with data driving with the mechanism model of the energy coupling link, so as to meet the formula: $Y = F_t(X^t) = |L_1|$.

5. The stability evaluation and static control method of the electricity-heat-gas integrated energy system according to claim 1, **characterized by** comprising: screening the abnormal data through an improved GSA (gravitational search algorithm) and performing association identification on the abnormal data according to the coupling characteristic of the electricity-heat-gas system in the step S2, and further comprising the following substeps:

S2.1, screening the abnormal data through the improved GSA, which specifically comprises the following steps:

S2.1.1, performing numerical normalization preprocessing on measurement data of the integrated energy system, so as to obtain the square of an error;
S2.1.2, clustering input data and calculating the cluster dispersion $W_{k_1}$, wherein

$$W_{k_1} = \sum_{a=1}^{k_1} \frac{1}{2|C_a|} D_a \,,$$

wherein, $|Ca|$ represents the number of data points contained in a cluster Ca, and $D_a$ represents the square sum of the distance between every two adjacent data points of all the data points in the cluster Ca;

S2.1.3, calculating the expectation $E(\ln(W_{r,k_1}))$ of $\ln(W_{r,k_1})$ of reference data corresponding to the meas-

$$E\left(\ln\left(W_{r,k_1}\right)\right) = \left(1/F\right)\sum_{a=1}^{F}\left(\ln\left(W_{r,k_1}\right)\right),$$

urement data when the number of clusters is, wherein

wherein, $F$ represents the number of classes of reference data sets generated according to uniform distribution within the normal scope of the data;

S2.1.4, calculating the gap counting value $Gap(k_1)$ corresponding to the number $k_1$ of the clusters, wherein the specific calculation formula is shown as follows:

$$Gap\left(k_1\right) = E\left(\ln\left(W_{r,k_1}\right)\right) - \ln\left(W_{k_1}\right);$$

the standard deviation $sd_{k_1}$ of $\ln(W_{r,k_1})$ and the standard deviation $s_{k_1}$ of $E(\ln(W_{r,k_1}))$ are calculated by the following formulas:

$$sd_{k_1} = \sqrt{\frac{1}{F}\sum_{a=1}^{F}\left[\ln\left(W_{r,k_1}\right) - E\left(\ln\left(W_{r,k_1}\right)\right)\right]^2} \,;$$

$$s_{k_1} = sd_{k_1}\sqrt{1 + \frac{1}{F}} \,;$$

S2.1.5, meeting the minimum $k_1$ value in an inequation $Gap(k_1) \geq Gap(k_1+1)\text{-}s_{k_1+1}$, namely the optimal number of the clusters;

S2.1.6, judging whether the abnormal data exists in the input data according to the condition whether $k_1$ is equal to 1; determining that the abnormal data does not exist in the input data if $k_1$ is equal to 1; else, determining that the abnormal data exists in the input data;

S2.2, inputting the abnormal data screened in the step S2.1 and performing association identification on the abnormal data according to the coupling characteristic of the electricity-heat-gas integrated energy system;

S2.2.1, respectively acquiring real-time measured data of the power system, the heat system and the natural gas system;

S2.2.2, respectively calculating the change rates $\Delta_e$, $\Delta_h$ and $\Delta_g$ of the real-time measurement data of the power system, the heat system and the natural gas system according to the following formula (2):

$$\Delta = \frac{\text{data at this time} - \text{data at last time}}{\Delta t} \times 100\% \qquad (2)\;;$$

S2.2.3, preliminarily determining that the abnormal data belongs to the power system, or the heat system or the natural gas system according to the acquired data of the power system, the heat system and the natural gas system;

S2.2.4, finally judging which system has the abnormal data by the following three inequations shown in the formulas (3), (4) and (5) according to the preliminary judgment of the abnormal data of every system:

$$|\Delta_e - \Delta_h| \le 2\% \qquad\qquad (3)$$

$$|\Delta_h - \Delta_g| \le 2\% \qquad\qquad (4)$$

$$|\Delta_e - \Delta_g| \le 2\% \qquad\qquad (5)$$

if preliminarily determining that the abnormal data belongs to the power system, preliminarily judging whether $|\Delta_e-\Delta_h| \le 2\%$ is met, if $|\Delta_e-\Delta_h| \le 2\%$ is met, judging whether $|\Delta_h-\Delta_g| \le 2\%$ is met, if $|\Delta_h-\Delta_g| \le 2\%$ is also met, determining that system data is normal; if $|\Delta_h-\Delta_g| \le 2\%$ is not met, determining that the natural gas system data is abnormal; if $|\Delta_e-\Delta_h| \le 2\%$ is not met, judging whether $|\Delta_h-\Delta_g| \le 2\%$ is met, and if $|\Delta_h-\Delta_g| \le 2\%$ is met, determining that the heat system data is abnormal; and if $|\Delta_h-\Delta_g| \le 2\%$ is not met, determining that the power system data is abnormal;

if preliminarily determining that the abnormal data belongs to the heat system, preliminarily judging whether $|\Delta_e-\Delta_h| \le 2\%$ is met, if $|\Delta_e-\Delta_h| \le 2\%$ is met, judging whether $|\Delta_e-\Delta_g| \le 2\%$ is met, if $|\Delta_e-\Delta_g| \le 2\%$ is also met, determining that system data is normal; if $|\Delta_e-\Delta_g| \le 2\%$ is not met, determining that the natural gas system data is abnormal; if $|\Delta_e-\Delta_h| \le 2\%$ is not met, judging whether $|\Delta_e-\Delta_g| \le 2\%$ is met, and if $|\Delta_e-\Delta_g| \le 2\%$ is met, determining that the power system data is abnormal; if $|\Delta_e-\Delta_g| \le 2\%$ is not met, determining that the heat system data is abnormal;

if preliminarily determining that the abnormal data belongs to the natural gas system, preliminarily judging whether $|\Delta_e-\Delta_g| \le 2\%$ is met, if $|\Delta_e-\Delta_g| \le 2\%$ is met, judging whether $|\Delta_h-\Delta_g| \le 2\%$ is met, and if $|\Delta_h-\Delta_g| \le 2\%$ is also met, determining that system data is normal; if $|\Delta_h-\Delta_g| \le 2\%$ is not met, determining that the heat system data is abnormal; if $|\Delta_e-\Delta_g| \le 2\%$ is not met, judging whether $|\Delta_h-\Delta_g| \le 2\%$ is met, and if $|\Delta_h-\Delta_g| \le 2\%$ is met, determining that the power system data is abnormal; and if $|\Delta_h-\Delta_g| \le 2\%$ is not met, determining that the natural gas system data is abnormal.

6. The stability evaluation and static control method of the electricity-heat-gas integrated energy system according to claim 1, **characterized in that** the iteration process of the Newton-Raphson method in the step S3.5 is shown as follows:

$$\begin{cases} F\left(x_{fluid}^{(k_n)}\right) = J^{(k_n)}\Delta x_{fluid}^{(k_n)} \\ x_{fluid}^{(k_n+1)} = x_{fluid}^{(k_n)} - \Delta x_{fluid}^{(k_n)} \end{cases}$$

wherein a first equation is an equation of a fluid part of the electricity-heat-natural gas system and comprises an energy flow equation of the natural gas system and a hydraulic equation of the heat system; $x_{fluid}^{(k_n)}$ represents a to-be-solved variable of the fluid part of the electricity-heat-natural gas system and comprises an energy flow model of the natural gas system and relevant variables in the hydraulic model of the heat system; $J^{(k_n)}$ represents a jacobi matrix obtained during $k_{nth}$ iteration by the Newton-Raphson method, and $\Delta x_{fluid}^{(k_n)}$ represents a modification vector at this time;

$$F\left(x_{fluid}^{(k_n)}\right) = \begin{bmatrix} f_{fluid1}\left[x_{g1}^{(k_n)}, x_{g2}^{(k_n)}, ..., x_{gn}^{(k_n)}\right] \\ f_{fluid2}\left[x_{g1}^{(k_n)}, x_{g2}^{(k_n)}, ..., x_{gn}^{(k_n)}\right] \\ \vdots \\ f_{fluidn}\left[x_{g1}^{(k_n)}, x_{g2}^{(k_n)}, ..., x_{gn}^{(k_n)}\right] \end{bmatrix}$$ is an error vector obtained through iteration by the Newton-Raphson method.

7. The stability evaluation and static control method of the electricity-heat-gas integrated energy system according to claim 6, **characterized in that** the an energy flow solving method of the heat system in the step S3.5 specifically comprises the following steps:

solving the hydraulic model by the Newton-Raphson method; solving the heat model according to the obtained mass flow rates of waterflow in all the pipelines; solving the water supply temperature and the water returning temperature, judging whether the calculation result of the energy flow of the heat system meets operation constraint and accuracy requirements, if yes, outputting the calculation result, and else, repeating the above process, wherein

the operation constraint comprises an equality constraint and an inequality constraint, wherein an active balance equation and a reactive balance equation of the power system, a flow balance equation of the natural gas system and a flow balance equation of the heat system form the equality constraint; the equality constraint is shown in the following five formulas:

$$P_{G,e} + P_{GAS,e} + P_{CHP,e} + P_{W,e} + C_{e,x} - P_{DEV,e} - \Delta P_{W,e} - P_{D,e} - P_e = 0, \ e = 1, 2, \ldots, N_e$$

$$Q_{G,e} + Q_{GAS,e} + Q_{CHP,e} + Q_{W,e} + Q_{C,e} - Q_{D,e} + C_{e,x} \cdot \frac{Q_{D,e}}{P_{D,e}} - Q_e = 0, \ e = 1, 2, \ldots, N_e$$

$$F_{G,g} + F_{DEV,g} + C_{g,y} - F_{GAS,g} - F_{CHP,g} - F_{D,g} - F_g = 0, \ g = 1, 2, \ldots, N_g$$

$$f_{G,h} + f_{DEV,h} + \frac{C_{h,z}}{GHV} + f_{CHP,h} - f_{D,h} - f_h = 0, \ h = 1, 2, \ldots, N_h$$

$$P_{CHP,z} = \frac{\left( H_{CHP,z} - C_{h,z} \right)}{v_{CHP,z}}, \ z = 1, 2, \ldots, N_b$$

wherein, $P_{G,e}$, $P_{GAS,e}$ and $P_{CHP,e}$, as well as $Q_{G,e}$, $Q_{GAS,e}$ and $Q_{CHP,e}$ respectively represent active output power and reactive output power of a non-fuel gas conventional unit, a fuel gas power generation unit and a fuel gas combined heat and power generation unit at a node $e$ of the power system; $P_{D,e}$, $Q_{D,e}$, $P_e$ and $Q_e$ respectively represent an active load, a reactive load, injected active power and injected reactive power at the node $e$ of the power system; $P_{W,e}$, $Q_{W,e}$ and $\Delta P_{W,e}$ respectively represent active power, reactive power and wind abandoning power of a wind power station at the node $e$ of the power system; $Q_{C,e}$ and $P_{DEV,e}$ respectively represent reactive compensation power and consumed power of a device at node $e$ of the power system; $C_{e,x}$ is the load reduction variable at the electric load node $x$; $F_{GAS,g}$, $F_{CHP,g}$ and $F_{DEV,g}$ respectively represent consumed airflow of a fuel gas power generation unit and a fuel gas combined heat and power generation unit and injected airflow of the device at a node g of the natural gas system; $F_{G,g}$, $F_{D,g}$ and $F_g$ respectively represent gas source injected airflow, the gas load and node injected airflow at the node g of the natural gas system; $C_{g,y}$ represents a load reduction variable at a node g of the gas load; GHV represents the high calorific value of natural gas; $f_{CHP,h}$ and $f_{DEV,h}$ respectively represent waterflow generated by a fuel gas combined heat and power generation unit and injected waterflow of the device at a node $h$ of the heat system; $f_{G,h}$, $f_{D,h}$ and $f_h$ respectively represent heat source injected waterflow, a heat load and node injected waterflow at the node $h$ of the heat system; $C_{h,z}$ represents load reduction variable at a node z of the heat load; $N_e$, $N_g$ and $N_h$ respectively represent the sum of nodes of the power system, the nodes of the natural gas system and the nodes of the heat system; $P_{CHP,z}$, $H_{CHP,z}$ and $v_{CHP,z}$ respectively represent active output power, the heat load and the heat-to-electric ratio of the fuel gas combined heat and power generation unit z; $N_b$ represents the sum of the fuel gas combined heat and power generation units;

the inequality constraint comprises upper/lower limit constraints of reduction variables and wind abandoning variables of the electrical load, the gas load and the heat load, an operation constraint of a fuel gas unit, a node pressure constraint of the natural gas system, a gas source injected gas volume constraint, a compression ratio constraint of a compressor, a node pressure constraint of the power system, an output power constraint of the non-fuel gas conventional unit and a line power constraint, wherein the inequality constraint is specifically shown as follows:

$$0 \leq C_{e,x} \leq P_{D,e}, \ x = 1, 2, \ldots, N_d$$

$$0 \leq \frac{C_{g,y}}{GHV} \leq F_{D,g}, \ y = 1, 2, \ldots, N_g$$

$$0 \leq C_{h,z} \leq H_{CHP,z}, \ z = 1, 2, \ldots, N_b$$

$$0 \leq \Delta P_{W,v} \leq P_{W,v}, \ v = 1, 2, \ldots, N_w$$

$$P_{GAS,z}^{\min} \leq P_{GAS,z} \leq P_{GAS,z}^{\max}, \ z = 1, 2, \ldots, N_a$$

$$Q_{GAS,z}^{\min} \leq Q_{GAS,z} \leq Q_{GAS,z}^{\max}, \ z = 1, 2, \ldots, N_a$$

$$P_{CHP,z}^{\min} \leq P_{CHP,z} \leq P_{CHP,z}^{\max}, \ z = 1, 2, \ldots, N_b$$

$$Q_{CHP,z}^{\min} \leq Q_{CHP,z} \leq Q_{CHP,z}^{\max}, \ z = 1, 2, \ldots, N_b$$

$$\pi_g^{\min} \leq \pi_g \leq \pi_g^{\max}, \ g = 1, 2, \ldots, N_g$$

$$F_{G,g}^{\min} \leq F_{G,g} \leq F_{G,g}^{\max}, \ g = 1, 2, \ldots, N_s$$

$$R_r^{\min} \leq R_r \leq R_r^{\max}, \ r = 1, 2, \ldots, N_p$$

$$V_e^{\min} \leq V_e \leq V_e^{\max}, \ e = 1, 2, \ldots, N_e$$

$$P_{G,e}^{\min} \leq P_{G,e} \leq P_{G,e}^{\max}, \ e = 1, 2, \ldots, N_u$$

$$Q_{G,e}^{\min} \leq Q_{G,e} \leq Q_{G,e}^{\max}, \ e = 1, 2, \ldots, N_u$$

$$-T_l^{\min} \leq T_l \leq T_l^{\max}, \ l = 1, 2, \ldots, N_r$$

$$\overrightarrow{m_n^{\min}} \leq \overrightarrow{m_n} \leq \overrightarrow{m_n^{\max}}, \ n = 1, 2, \ldots, N_t$$

wherein, $\pi_g$ represents the pressure at the node $g$ of the natural gas system; $R_r$ represents the compression ratio of a compressor branch r; $T_l$ represents the power flowing through an electric transmission line $l$; $\overrightarrow{m_n}$ represents the mass flow rate of the pipelines in the heat system, and $\overrightarrow{m_n^{\max}}$ and $\overrightarrow{m_n^{\min}}$ respectively represent an upper limit and a lower limit; $N_t$ represents the sum of hot water pipeline, and $N_s$, $N_u$ and $N_r$ respectively represent the sum of gas sources of natural gas, non-fuel gas conventional units and electric transmission lines; $N_d$, $N_g$ and $N_b$ respectively represent the sum of the nodes of the electrical load, the nodes of the gas load and the fuel gas combined heat and power generation units; $N_a$ represents the sum of the fuel gas power generation units; $N_p$ represents the sum of the compressor branches; $V_e$ represents the voltage at the node $e$ of the power system; and $N_w$ represents the sum of the wind power stations.

8. The stability evaluation and static control method of the electricity-heat-gas integrated energy system according to claim 7, **characterized in that** the optimized model in the step S3.7 is specially shown as follows:
the established optimized model takes the minimum value of the sum of the reduction quantities and the wind abandoning quantities of the electrical load, the gas load and the heat load as an optimized target, and an objective function is shown as follows:

$$\min f = \sum_{i=1}^{N_d} \lambda_{e,x} C_{e,x} + \sum_{m=1}^{N_g} \lambda_{g,y} C_{g,y} + \sum_{k=1}^{N_b} \lambda_{h,z} C_{h,z} + \sum_{i=1}^{N_w} \lambda_{w,v} \Delta P_{w,v}$$

wherein, $C_{e,x}$, $C_{g,y}$ and $C_{h,z}$ respectively represent the load reduction variables of the node $x$ of the electrical load, the node $y$ of the gas load and the fuel gas combined heat and power generation unit $z$; $\Delta P_{w,v}$ represents the wind abandoning variable of a wind power station $v$; $N_d$ and $N_g$ respectively represent the sum of the nodes of the electrical load and the nodes of the gas load; $\lambda_{e,x}$, $\lambda_{g,y}$, $\lambda_{h,z}$ and $\lambda_{w,v}$ respectively represent weight factors representing the significance of the electrical load, the gas load and the heat load and the wind abandoning severity of all the wind power stations;
and the operation constraint in the step S3.5 is used as a constraint condition of the optimized model.

9. The stability evaluation and static control method of the electricity-heat-gas integrated energy system according to claim 1, **characterized in that** calculating a stability index in the step S3.8 comprises:

$$p_y' = \frac{\sum_{m'=1}^{m'_{max}} \int A_{m'} dt_{m'}}{\sum_{m'=1}^{m'_{max}} E \cdot t_{m'}} \times 100\% ,$$

out-of-limit degree:
wherein, $A_{m'}$ represents the out-of-limit degree of the energy flow at the $m'$th time, $t_{m'}$ represents the out-of-limit time of the energy flow at the $m'$th time, E represents the total energy of the electricity-heat-gas system, and $m'_{max}$ represents the total number of out-of-limit frequency of the energy flow;

$$q_y' = \frac{m'_{max}}{N} \times 100\% ;$$

out-of-limit ratio:
wherein, $N$ represents the sampling frequency;
the stability of the system is evaluated according to the value of $(p_y', q_y')$, evaluation standard scores are given according to a stability evaluation standard comparison table which is shown in Tab. 1, and the full score is 10.

Tab. 1

| Condition | Evaluation Score |
|---|---|
| $pq \leq 0.04\%$ | 10 |
| $0.04\% < pq \leq 0.25\%$ | 9 |
| $0.25\% < pq \leq 1\%$ | 8 |
| $1\% < pq \leq 2.25\%$ | 7 |
| $2.25\% < pq \leq 4\%$ | 6 |
| $4\% < pq \leq 6.25\%$ | 5 |
| $6.25\% < pq \leq 9\%$ | 4 |

(continued)

| Condition | Evaluation Score |
|---|---|
| 9% < pq ≤ 12.25% | 3 |
| 12.25% < pq ≤ 16% | 2 |
| 16% < pq ≤ 25% | 1 |
| pq > 25% | 0 |

The difference of time scales needs to be considered for calculation of the stability index, specifically, for the heat load, calculation of the index needs to be modified, and the modification of the stability index of the heat load comprises the following steps: determining that the temperature is constant when no disturbance exists and determining that the energy flow is out of limit if the temperature of the heat load is lower than the lower temperature limit or higher than the upper temperature limit in some time period, wherein the time period is a part of the total lasting time that the energy flow is out of limit or is not restrained after disturbance appears;

10. The stability evaluation and static control method of the electricity-heat-gas integrated energy system according to claim 1, **characterized in that** the limited cost in the step 4 comprises time cost, human cost and capital cost which are shown in the following three formulas:

$$C_{t''} = \frac{t''}{T''};$$

$$C_{h''} = \frac{h''}{H''};$$

$$C_{p''} = \frac{p''}{P''};$$

wherein, $C_{t''}$ represents the time cost, $t''$ represents the time from a process of causing problem, to a process of solving the problem and to a process of recovering to be normal of the system, and $T''$ represents the time from problem causing of the system at the last time to the problem causing of the system at this time; $C_{h''}$ represents the human cost, $h''$ represents the number of persons for solving the problems, and $H''$ represents the number of workers for normal work of the system; $C_{p''}$ represents the capital cost, $p''$ represents the amount of capitals required for solving the problems, and $P''$ represents the amount of capitals required for annual mean maintenance of the system; and

the cost belongs to the limited cost only when all the three formulas meet the inequality constraints shown as follows, and the cost belong to the excess cost otherwise:

$$\begin{cases} C_{t''} = \dfrac{t''}{T''} \leq \dfrac{1}{100} \\ C_{h''} = \dfrac{h''}{H''} \leq \dfrac{9}{10} \\ C_{p''} = \dfrac{p''}{P''} \leq \dfrac{1}{2} \end{cases}$$

Fig. 1

```
        ┌─────────────┐
        │    Start    │
        └─────────────┘
               │
               ▼
┌─────────────────────────────────────┐
│ acquire site data, wherein the       │
│ database is established by the       │
│ historical data when the site data   │
│ does not meet the requirement;       │
└─────────────────────────────────────┘
               │
               ▼
┌─────────────────────────────────────┐
│ get rid of wild points by utilizing  │
│ upper and lower cut-off points so as │
│ to obtain an effective data set      │
└─────────────────────────────────────┘
               │
               ▼
┌─────────────────────────────────────┐
│ divide Ω into subsets according to   │
│ each dimensionality so as to         │
│ determine the number of the          │
│ subspaces;                           │
└─────────────────────────────────────┘
               │
               ▼
┌─────────────────────────────────────┐
│ determine boundaries of a hypercube, │
│ wherein Lujt and LD_{jt} respectively│
│ represent an upper boundary and a    │
│ lower boundary of a t_{th} subspace  │
│ on a j_{th} dimensionality           │
└─────────────────────────────────────┘
               │
               ▼
┌─────────────────────────────────────┐
│ change space depth in a self-adaptive│
│ manner: during division of the       │
│ subspaces, start dividing of the     │
│ subspaces from the minimum number of │
│ the spaces, calculate the number P_i │
│ of data points in each of the divided│
│ subspaces, and count the number of   │
│ P_i=0                                │
│ when the number is less than a set   │
│ value ε , the space division depth   │
│ needs to be increased, so that the   │
│ space division is deepened           │
│ continuously by increasing the number│
│ of q, and the space division is      │
│ stopped until the number of spaces   │
│ reaches ε ;                          │
└─────────────────────────────────────┘
               │
               ▼
┌─────────────────────────────────────┐
│ combine the subspaces: after space   │
│ division, if only one piece of data  │
│ exists in a part of spaces, calculate│
│ a mean value of euclidean distances  │
│ between the data and data in the     │
│ adjacent spaces, combine the data    │
│ space and a data space with the      │
│ minimum mean value, and finally      │
│ determine q_l subspaces              │
└─────────────────────────────────────┘
               │
               ▼
┌─────────────────────────────────────┐
│ perform regression modeling with a   │
│ nonlinear iteration partial least    │
│ squares method in the q_1 subspaces  │
│ in sequence, so as to obtain         │
│ regression models of all the         │
│ subspaces                            │
└─────────────────────────────────────┘
               │
               ▼
┌─────────────────────────────────────┐
│ output a result and update the       │
│ database                             │
└─────────────────────────────────────┘
               │
               ▼
        ┌─────────────┐
        │             │
        └─────────────┘
```

Fig. 2

start

for the first subspace

define a boundary s of data, wherein when $j \leqslant s$ , $x_{ij}$ represents input data, namely an independent variable, and an independent variable matrix $X^t$
when $j > s$, $x_{ij}$ represents output data, namely a dependent variable, and a dependent variable matrix is $Y^t$; calculate a score vector $t1$ and a load vector $p'$ of $X^t$,and calculate a score vector u and a load vector $q'$ Of $Y^t$ ;

number of each of subspaces is + 1

calculate residual errors of the matrixes $X^t$ and $Y^t$

calculate a predicted error square sum $S_{PRESS}$ and continue to select pivot elements of the matrixes for iterative computation when the predicted error square sum is less than expected accuracy; when the predicted error square sum is more than the expected accuracy, obtain the optimal number of the pivot elements and obtain a relational expression of the matrixes $X^t$ and $Y^t$, so as to obtain a regression model

No

achieve the $q_{1th}$ subspace

Yes

obtain regression model of all of subspaces

end

Fig. 3

Fig. 4

Fig. 5

input abnormal data

respectively obtain data of power system, heat system and natural gas system

respectively calculate change rate $\Delta_e$、$\Delta_h$、$\Delta_g$ of data of the power system, heat system and natural gas system

preliminarily determine that the abnormal data belongs to the power system, the heat system or the natural gas system

Yes — suspicious data belongs to power system

No

suspicious data belongs to heat system — Yes

No

enter condition 1

enter condition 3

enter condition 2

Fig. 6

Condition 1

$\left|\Delta_e - \Delta_h\right| \leq 2\%$ — No

Yes

No — $\left|\Delta_h - \Delta_g\right| \leq 2\%$

$\left|\Delta_h - \Delta_g\right| \leq 2\%$ — No

Yes

Yes

natural gas system data is abnormal

system data is normal

heat system data is abnormal

power system data is abnormal

Fig. 7

Condition 2

$$|\Delta_e - \Delta_h| \leq 2\%$$

No

Yes

No

$$|\Delta_e - \Delta_g| \leq 2\%$$

Yes

$$|\Delta_e - \Delta_g| \leq 2\%$$

No

Yes

natural gas system data is abnormal

system data is normal

power system data is abnormal

heat system data is abnormal

Fig. 8

Condition 3

$$|\Delta_e - \Delta_g| \leq 2\%$$

No

Yes

No

$$|\Delta_h - \Delta_g| \leq 2\%$$

Yes

$$|\Delta_h - \Delta_g| \leq 2\%$$

No

Yes

heat system data is abnormal

system data is normal

power system data is abnormal

natural gas system data is abnormal

Fig. 9

Start

read initial state parameters of the integrated energy system, wherein the sampling Freqency $k'$ is equal to 1, the out-of-limit frequency $m'$ of energy flow is equal to 0, and the out-of-limit value of the energy flow at the $m'$ th time is A$_{m'}$ =0;

generate disturbance

sample the random variables corresponding to the states of system elements, the electrical/heat /gas load and wind speed by a non-sequential Monte Carlo simulation method, so as to acquire the system state

perform topology analysis on an electricity-heat-gas interconnected system, so as to analyze the number of subsystems formed by connecting the nodes of the system by branches and coupling elements

energy flow calculation

No

energy flow is out-of-limit

Yes

$$m' = m'+1$$

record the out-of-limit value A$_{m'}$ and the out-of-limit time $t_{m'}$ of energy flow at this time

calculate the reduction quantities and the wind abandoning quantities of the electrical/heat/gas load and the heat load

$$k' = k'+1$$

$k'$ is equal to the maximum sampling time $k'$    No

Yes

$$m'_{max} = m'$$

calculate stability index

output stability evaluation result

Fig. 10

electricity-heat-natural gas system energy flow mathematical model:

$$\begin{cases} f_{EPS}\left(x_e, x_g, x_h, x_{HES}\right) = 0 \\ f_{NGS}\left(x_e, x_g, x_h, x_{HES}\right) = 0 \\ f_{DHS}\left(x_e, x_g, x_h, x_{HES}\right) = 0 \\ f_{HES}\left(x_e, x_g, x_h, x_{HES}\right) = 0 \end{cases}$$

energy flow is comprehensively solved by a decoupling solving method

model integrated energy system

base

power system adopts a forward-back substitution method for solving the power flow

natural gas system adopts a Newton-Raphson method for solving the power flow

heat system adopts an energy flow solving method for solving the power flow

Fig. 11

start

solve the hydraulic model by the Newton-Raphson method

solve the mass flow rates of water flow in all the pipelines

solve the heat model based on the

solve the water supply temperature and the water returning temperature

calculation result of the energy flow of the heat system meets operation constraint and the accuracy requirement

No

output calculation

Fig. 12

subsystemrs of integrated energy system have problems

No

independently solve problems with subsystem

No

solve problems through multisystem coordination

yes

No

solve problems through limited cost

yes

solve problems through limited cost

yes

No

solve problems through multisystem coordination

No

yes

solve problems through limited cost

No

Yes

execute scheme

record the scheme corresponding to the problem at this time in report

give an alarm

Fig. 13

start

$$C_t = \frac{t}{T} \le \frac{1}{100}$$

$$C_h = \frac{h}{H} \le \frac{9}{10}$$

$$C_p = \frac{p}{P} \le \frac{1}{2}$$

No

Yes

limited cost

excess cost

Fig. 14

## INTERNATIONAL SEARCH REPORT

<table>
<tr><td colspan="2">International application No.</td></tr>
<tr><td colspan="2">**PCT/CN2018/088349**</td></tr>
</table>

**A.  CLASSIFICATION OF SUBJECT MATTER**

H02J 3/46(2006.01)i

According to International Patent Classification (IPC) or to both national classification and IPC

**B.  FIELDS SEARCHED**

Minimum documentation searched (classification system followed by classification symbols)

H02J; G06Q

Documentation searched other than minimum documentation to the extent that such documents are included in the fields searched

Electronic data base consulted during the international search (name of data base and, where practicable, search terms used)

CNABS, CNKI, CNTXT, DWPI, SIPOABS, USTXT: 电, 热, 气, 能流模型, 异常, 扰动, 事故, 稳态评估, 稳定评估, 稳定性, 协调, power, heat, gas, energy flow, model, abnormal, disturbance, stability, assessment, coordinat+

**C.  DOCUMENTS CONSIDERED TO BE RELEVANT**

| Category* | Citation of document, with indication, where appropriate, of the relevant passages | Relevant to claim No. |
|---|---|---|
| A | CN 107808216 A (CHONGQING UNIVERSITY) 16 March 2018 (2018-03-16)<br>entire document | 1-10 |
| A | CN 105447586 A (STATE GRID CORPORATION OF CHINA ET AL.) 30 March 2016<br>(2016-03-30)<br>entire document | 1-10 |
| A | CN 107730129 A (CHONGQING UNIVERSITY) 23 February 2018 (2018-02-23)<br>entire document | 1-10 |
| A | US 2016258361 A1 (GEN ELECTRIC) 08 September 2016 (2016-09-08)<br>entire document | 1-10 |
| A | EP 3039771 A4 (ROBERT BOSCH GMBH) 18 January 2017 (2017-01-18)<br>entire document | 1-10 |

☐ Further documents are listed in the continuation of Box C.        ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 January 2019** | **24 January 2019** |

| Name and mailing address of the ISA/CN | Authorized officer |
|---|---|
| **State Intellectual Property Office of the P. R. China (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/088349**

| Patent document cited in search report | | | Publication date (day/month/year) | Patent family member(s) | | | Publication date (day/month/year) |
|---|---|---|---|---|---|---|---|
| CN | 107808216 | A | 16 March 2018 | None | | | |
| CN | 105447586 | A | 30 March 2016 | None | | | |
| CN | 107730129 | A | 23 February 2018 | None | | | |
| US | 2016258361 | A1 | 08 September 2016 | US | 9926852 | B2 | 27 March 2018 |
| EP | 3039771 | A4 | 18 January 2017 | WO | 2015031581 | A1 | 05 March 2015 |
| | | | | US | 2016218505 | A1 | 28 July 2016 |
| | | | | EP | 3039771 | B1 | 09 May 2018 |
| | | | | EP | 3039771 | A1 | 06 July 2016 |

Form PCT/ISA/210 (patent family annex) (January 2015)